(19) Europäisches Patentamt
European Patent Office
Office européen des brevets

(11) **EP 3 493 554 A1**

(12) **EUROPEAN PATENT APPLICATION**
published in accordance with Art. 153(4) EPC

(43) Date of publication:
**05.06.2019 Bulletin 2019/23**

(51) Int Cl.:
*H04R 3/00* (2006.01)   *B64F 1/36* (2017.01)
*G08B 25/00* (2006.01)   *H04N 7/18* (2006.01)
*H04R 1/40* (2006.01)

(21) Application number: **17833974.3**

(22) Date of filing: **04.07.2017**

(86) International application number:
**PCT/JP2017/024476**

(87) International publication number:
**WO 2018/020965 (01.02.2018 Gazette 2018/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **28.07.2016   JP 2016148471**
**30.05.2017   JP 2017107170**

(71) Applicant: **Panasonic Intellectual Property
Management Co., Ltd.
Osaka-shi, Osaka 540-6207 (JP)**

(72) Inventors:
• **MATSUMOTO Hiroyuki**
  **Osaka 540-6207 (JP)**
• **YOSHIKUNI Shintaro**
  **Osaka 540-6207 (JP)**
• **YUGE Ryoichi**
  **Osaka 540-6207 (JP)**

(74) Representative: **Eisenführ Speiser
Patentanwälte Rechtsanwälte PartGmbB
Postfach 10 60 78
28060 Bremen (DE)**

(54) **UNMANNED AERIAL VEHICLE DETECTION SYSTEM AND UNMANNED AERIAL VEHICLE DETECTION METHOD**

(57)   In an unmanned aerial vehicle detection system, an omnidirectional camera images a monitoring area. A microphone array picks up a sound in the monitoring area. A monitoring device detects an unmanned aerial vehicle appearing in the monitoring area using the sound data picked up by the microphone array. When displaying image data of the monitoring area captured by the omnidirectional camera on a monitor, a signal processor in the monitoring device superimposes an identification mark obtained by converting the unmanned aerial vehicle into visual information on the image data of the monitoring area.

FIG. 19

## Description

TECHNICAL FIELD

The present disclosure relates to an unmanned aerial vehicle detection system and an unmanned aerial vehicle detection method for detecting an unmanned aerial vehicle (UAV).

BACKGROUND ART

A flying object monitoring device has been known that is capable of detecting an existence of an object and detecting a flying direction of the object using a plurality of sound detectors that detect sounds generating within a monitoring area for each direction. (see PTL 1, for example). When detecting a flying and a flying direction of the flying object by a sound detection using a microphone, a processing device of the flying object monitoring device moves a monitoring camera in the direction in which the flying object flew. The processing device displays an image captured by the monitoring camera on a display device.

However, for example, in an image captured by the monitoring camera, various flying objects other than an unmanned aerial vehicle desired by a user may be reflected. In this case, it is difficult to grasp an existence of an unmanned aerial vehicle desired by a user and even if an unmanned aerial vehicle exists, it is also difficult to easily grasp a position of the unmanned aerial vehicle form surrounding circumstances.

The present disclosure aims to easily determine an existence and a position of an unmanned aerial vehicle desired by a user by using a captured image by a camera.

Citation List

Patent Literature

PTL 1: Japanese Patent Unexamined Publication No. 2006-168421
PTL 2: Japanese Patent Unexamined Publication No. 2014-143678
PTL 3: Japanese Patent Unexamined Publication No. 2015-029241

SUMMARY OF THE INVENTION

According to an aspect of the present disclosure, there is provided an unmanned aerial vehicle detection system including a camera that images an imaging area, a microphone array that picks up a sound in the imaging area, a display that displays a captured image of the imaging area captured by the camera, and a signal processor that detects an unmanned aerial vehicle appearing in the imaging area using the sound picked up by the microphone array, in which the signal processor superimposes first identification information obtained by converting the unmanned aerial vehicle into visual information in the captured image of the imaging area on the captured image of the imaging area and displays on the displayer.

According to another aspect of the present disclosure, there is provided an unmanned aerial vehicle detection method in the unmanned aerial vehicle detection system, the method including imaging an imaging area by a camera, picking up a sound in the imaging area by a microphone array, detecting an unmanned aerial vehicle appearing in the imaging area using the sound picked up by the microphone array, generating first identification information obtained by converting the unmanned aerial vehicle into visual information in a captured image of the imaging area, and displaying the first identification information by superimposing on the captured image of the imaging area on the displayer.

According to the present disclosure, it is possible to easily determine an existence and a position of an unmanned aerial vehicle desired by a user by using a captured image by a camera.

BRIEF DESCRIPTION OF DRAWINGS

FIG. 1 is a diagram showing an example of a schematic configuration of an unmanned aerial vehicle detection system according to a first exemplary embodiment.
FIG. 2 is a diagram showing an example of an appearance of a sound source detection unit.
FIG. 3 is a block diagram showing in detail an example of an internal configuration of a microphone array.

FIG. 4 is a block diagram showing in detail an example of an internal configuration of an omnidirectional camera.

FIG. 5 is a block diagram showing in detail an example of an internal configuration of a PTZ camera.

FIG. 6 is a block diagram showing in detail an example of an internal configuration of a monitoring device.

FIG. 7 is a timing chart showing an example of patterns of detection sound signals of an unmanned aerial vehicle registered in a memory.

FIG. 8 is a timing chart showing an example of frequency changes of detection sound signals obtained as a result of a frequency analysis processing.

FIG. 9 is a sequence diagram showing an example of detection movement of an unmanned aerial vehicle in the unmanned aerial vehicle detection system of the first exemplary embodiment.

FIG. 10 is a flowchart showing an example of details of an unmanned aerial vehicle detection determination procedure of procedure T15 in FIG. 9.

FIG. 11 is a diagram showing an example of a state in which a directional direction is sequentially scanned within a monitoring area and an unmanned aerial vehicle is detected.

FIG. 12 is a diagram showing an example of display screens of a monitor when an unmanned aerial vehicle is not detected.

FIG. 13 is a diagram showing an example of display screens of the monitor when an unmanned aerial vehicle is detected.

FIG. 14 is a diagram showing an example of display screens of the monitor when an unmanned aerial vehicle is detected and the PTZ camera changes an optical axis direction in association with a detection.

FIG. 15 is a diagram showing another example of display screens of the monitor when an unmanned aerial vehicle is detected and the PTZ camera changes the optical axis direction in association with the detection.

FIG. 16 is a diagram showing an example of a schematic configuration of an unmanned aerial vehicle detection system according to a first modification example of the first exemplary embodiment.

FIG. 17 is a diagram showing an example of a schematic configuration of an unmanned aerial vehicle detection system according to a second modification example of the first exemplary embodiment.

FIG. 18 is a diagram showing an example of a schematic configuration of an unmanned aerial vehicle detection system according to a third modification example of the first exemplary embodiment.

FIG. 19 is a sequence diagram showing an example of detection movement of an unmanned aerial vehicle in the unmanned aerial vehicle detection system of the third modification example of the first exemplary embodiment.

FIG. 20 is a diagram showing an example of a schematic configuration of an unmanned aerial vehicle detection system according to a fourth modification example of the first exemplary embodiment.

FIG. 21 is a diagram showing an example of a schematic configuration of an unmanned aerial vehicle detection system according to a fifth modification example of the first exemplary embodiment.

FIG. 22 is a diagram showing an example of a schematic configuration of an unmanned aerial vehicle detection system according to a second exemplary embodiment.

FIG. 23 is a block diagram showing in detail an example of an internal configuration of a distance calculation device.

FIG. 24 is a flowchart showing an example of detection movement procedure in a detection device.

FIG. 25 is a flowchart showing an example of a distance calculation procedure in the distance calculation device.

FIG. 26 is an explanatory diagram of an example of a method of obtaining a distance from a sound source detection unit to an unmanned aerial vehicle using a technique of a triangulation method.

FIG. 27 is an explanatory diagram of a calculation example of a position of an unmanned aerial vehicle.

FIG. 28 is a diagram showing an example of a UI screen including a distance from the sound source detection unit to an unmanned aerial vehicle.

FIG. 29 is a flowchart showing an example of a section estimation procedure within a monitoring area in which an unmanned aerial vehicle exists according to a third exemplary embodiment.

FIG. 30 is a diagram showing an example of a screen display of a display on which a water purification plant including a block in which an unmanned aerial vehicle exists above the sky, is displayed.

FIG. 31A is an explanatory diagram of determining a correctness of a detection of an unmanned aerial vehicle by two sound source detection units according to a fourth exemplary embodiment.

FIG. 31B is an explanatory diagram of determining a correctness of a detection of an unmanned aerial vehicle by two sound source detection units according to the fourth exemplary embodiment.

FIG. 31C is an explanatory diagram of determining a correctness of a detection of an unmanned aerial vehicle by two sound source detection units according to the fourth exemplary embodiment.

FIG. 32 is a flowchart showing an example of a determination procedure of detection of an unmanned aerial vehicle detection by two sound source detection units.

DESCRIPTION OF EMBODIMENTS

Hereinafter, each exemplary embodiment specifically disclosing an unmanned aerial vehicle detection system and an unmanned aerial vehicle detection method according to the present invention will be described in detail with reference to drawings as appropriate. However, the detailed explanation may be omitted more than necessary. For example, detailed explanations of already well-known matters and redundant explanation on substantially the same configuration may be omitted. This is to avoid making the following explanation unnecessarily redundant and to facilitate understanding by those skilled in the art. Note that, the accompanying drawings and the following descriptions are provided to enable those skilled in the art to sufficiently understand the present disclosure, and are not intended to limit the claimed subject matter.

First Exemplary Embodiment

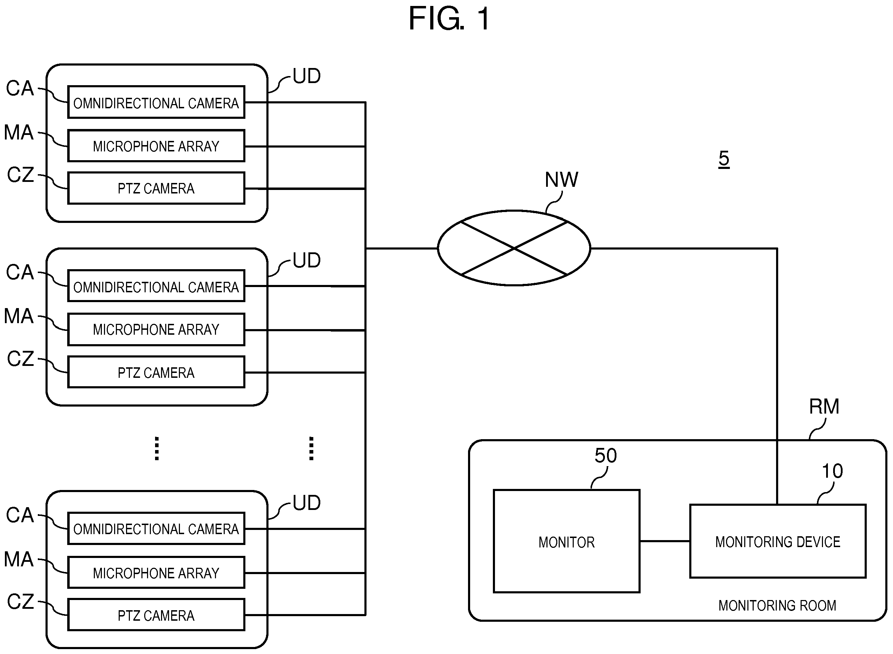

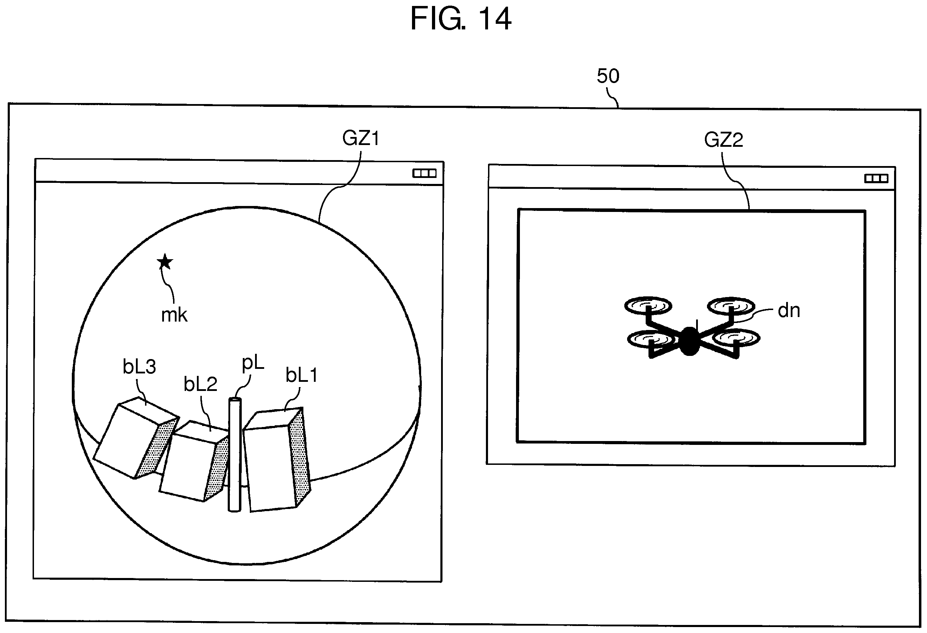

FIG. 1 is a diagram showing an example of a schematic configuration of unmanned aerial vehicle detection system 5 according to a first exemplary embodiment. Unmanned aerial vehicle detection system 5 detects unmanned aerial vehicle dn (see FIG. 14, for example) desired by a user as a detection target. Unmanned aerial vehicle dn is a multicopter such as a UAV (for example, drone) autonomously flying using a global positioning system (GPS) function, a radio-controlled helicopter that is wirelessly controlled by a third party, or the like. Such unmanned aerial vehicle dn is used for, for example, aerial photographing of a target, spraying of liquid such as agricultural chemicals, transportation of goods, or the like.

In the present exemplary embodiment, a multicopter type drone having a plurality of rotors (in other words, rotating blades) mounted on is exemplified as unmanned aerial vehicle dn. In a multicopter type drone, in general, when the number of wings of a rotor is two, harmonics with a frequency two times higher than a specific frequency, and harmonics with multiples of a frequency are generated. Similarly, when the number of wings of a rotor is three, harmonics with a frequency three times higher than a specific frequency, and harmonics with multiples of the frequency are also generated. This also applies to a case where the number of wings of a rotor is four or more.

Unmanned aerial vehicle detection system 5 has a configuration including a plurality of sound source detection units UD, monitoring device 10, and monitor 50. The plurality of sound source detection units UD is mutually connected to monitoring device 10 via network NW. Each sound source detection unit UD has microphone array MA, omnidirectional camera CA, and PTZ camera CZ. Note that, each sound source detection unit is referred to as sound source detection unit UD unless it is necessary to particularly distinguish each sound source detection unit. Similarly, each microphone array, omnidirectional camera, and PTZ camera are referred to as microphone array MA, omnidirectional camera CA, and PTZ camera CZ unless it is necessary to particularly distinguish each microphone array, omnidirectional camera, and PTZ camera.

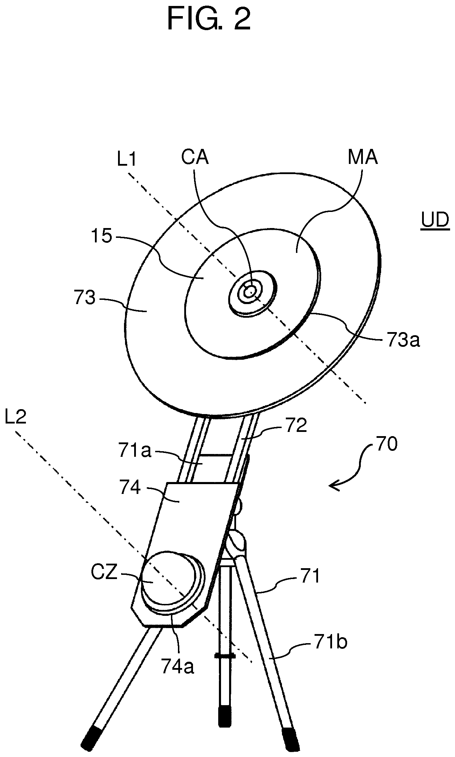

In sound source detection unit UD, microphone array MA picks up omnidirectional sounds in a sound pickup area where its own device is installed in a nondirectional state. Microphone array MA has casing 15 (see FIG. 2) in which a cylindrical opening portion having a predetermined width is formed at a center. Sounds picked up by microphone array MA broadly include, for example, mechanical movement sounds such as a drone, sounds emitted by a human being or the like, and other sounds, and not only sounds in an audible frequency range (that is, 20 Hz to 23 khHz) but also low frequency sounds lower than the audible frequency and ultrasonic sounds exceeding the audible frequency may be included.

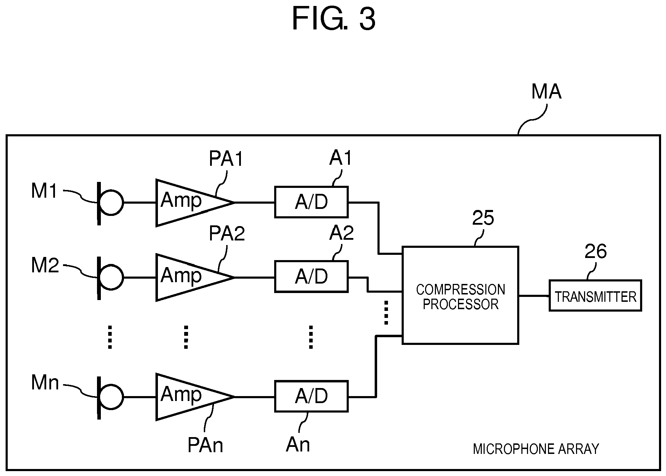

Microphone array MA includes a plurality of nondirectional microphones M1 to Mn (see FIG. 3). Microphones M1 to Mn are disposed at predetermined intervals (for example, uniform intervals) concentrically in a circumferential direction around the opening port provided in casing 15. As the microphone, for example, an electret condenser microphone (ECM) is used. Microphone array MA transmits sound data of sounds obtained by picking up sounds from each of microphones M1 to Mn (see the following description) to monitoring device 10 via network NW. Note that, the above described arrangement of each of microphones M1 to Mn is merely an example, and other arrangements may be used.

Microphone array MA has a plurality of amplifiers PA1 to PAn (see FIG. 3) for amplifying the plurality of microphones M1 to Mn (for example, n=32) and output signals of the plurality of microphones M1 to Mn respectively. Analog signals output from each amplifier are respectively converted into digital signals by A/D converters A1 to An (see FIG. 3) which will be described later. Note that, the number of microphones in the microphone array is not limited to 32, but may be other numbers (for example, 16, 64, and 128).

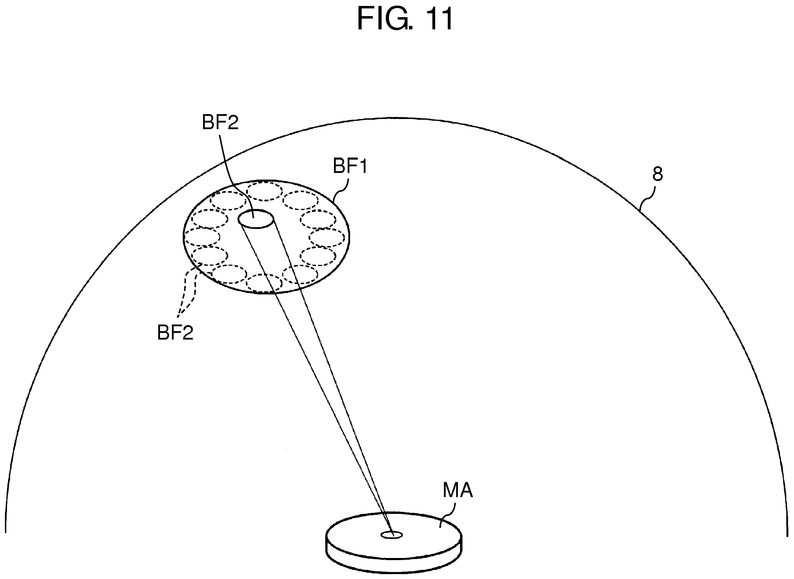

Omnidirectional camera CA that substantially coincides with a volume of the opening port is accommodated inside the opening port formed in a center of casing 15 (see FIG. 2) of microphone array MA. That is, microphone array MA and omnidirectional camera CA are integrally disposed (see FIG. 2). Omnidirectional camera CA is a camera equipped with a fish-eye lens capable of imaging an omnidirectional image of the imaging area which is the sound pickup space. In the present exemplary embodiment, both the sound pickup area and the imaging area are described as a common monitoring area, however spatial sizes (for example, volumes) of the sound pickup area and the imaging area may not be the same. For example, a volume of the sound pickup area may be larger or smaller than a volume of the imaging area. In short, it is only necessary for the sound pickup area and the imaging area to have a common volume portion. Omnidirectional camera CA functions, for example, as a monitoring camera capable of imaging the imaging area in which sound source detection unit UD is installed. That is, omnidirectional camera CA, for example, has an angle of view of 180° in a vertical direction and 360° in a horizontal direction, and for example, images monitoring area 8 (see FIG. 11) which is a half celestial sphere as an imaging area.

In each sound source detection unit UD, omnidirectional camera CA is fitted inside the opening portion of casing 15, so that omnidirectional camera CA and microphone array MA are disposed coaxially. In this way, when an optical axis of omnidirectional camera CA and a central axis of the casing of microphone array MA coincide with each other, the imaging area and the sound pickup area in an around axial direction (that is, horizontal direction) are substantially the same, therefore a position of a subject in an image and a position of a sound source of a pickup target can be expressed in a same coordinate system (for example, coordinates indicated by (horizontal angle, vertical angle)). Note that, in order to detect unmanned aerial vehicle dn flying from the sky, respective sound source detection units UD are provided, for example, so that upward in a top-and-bottom direction becomes a sound pickup surface and an image pickup surface (see FIG. 2).

Monitoring device 10 forms a directivity with any direction as a main beam direction based on a user operation with respect to omnidirectional sounds picked up by microphone array MA (that is, beam forming), and a sound in the directional direction can be emphasized. A technology related to a directivity control processing of sound data for performing beam forming of sounds picked up by microphone array MA is a known technology as disclosed in, for example, PTL 2 and PTL 3.

Monitoring device 10 uses an image captured by omnidirectional camera CA (hereinafter may be abbreviated as "captured image" in some cases), performs a processing of the captured image, and generates an omnidirectional image. Note that, the omnidirectional image may be generated by omnidirectional camera CA instead of monitoring device 10.

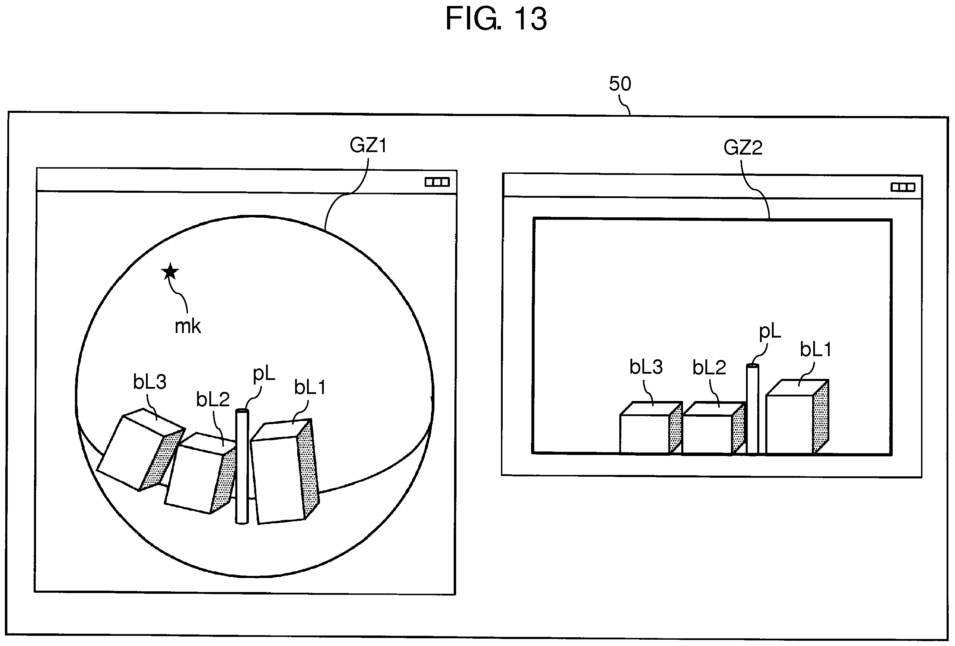

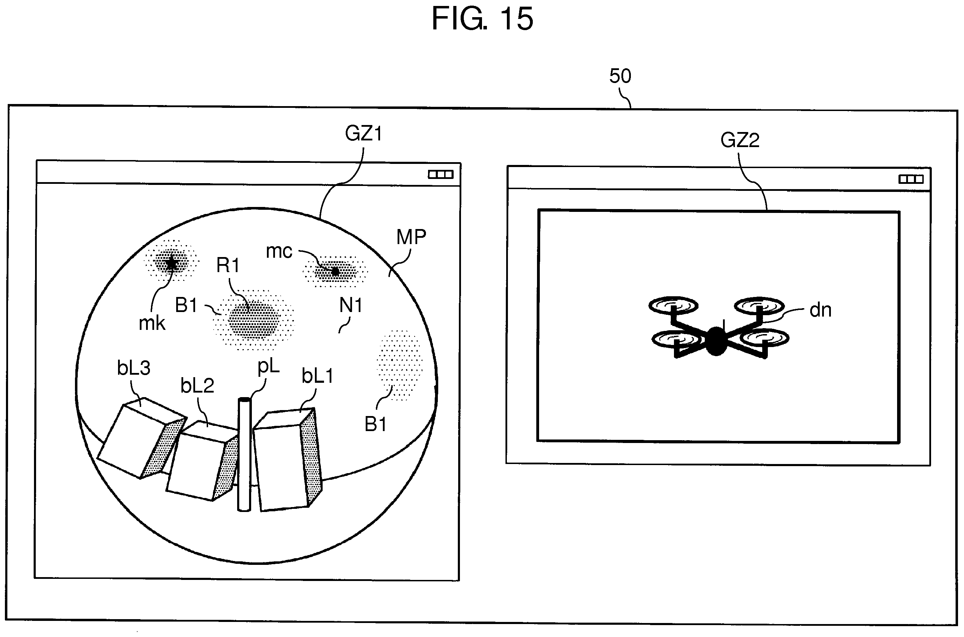

Using an image based on a calculated value of sound pressure of sounds picked up by microphone array MA (see FIG. 15) and an image based on the captured image captured by omnidirectional camera CA, monitoring device 10 outputs various images to monitor 50 or the like and displays the images. For example, monitoring device 10 displays omnidirectional image GZ1 and identification mark mk obtained by converting detected unmanned aerial vehicle dn into visual information in omnidirectional image GZ1 (see FIG. 13), on the monitor 50. Monitoring device 10 is configured using, for example, a personal computer (PC) or a server. The visual information means information, for example, in omnidirectional image GZ1, represented to the extent that a user can clearly identify from other subjects when viewing omnidirectional image GZ1, and the same may apply hereinafter.

Monitor 50 displays omnidirectional image GZ1 captured by omnidirectional camera CA. Monitor 50 also generates and displays a composite image in which identification mark mk is superimposed on omnidirectional image GZ1. Note that, monitor 50 may be configured as a device integrated with monitoring device 10.

In FIG. 1, the plurality of sound source detection units UD and monitoring device 10 have a communication interface and are connected to each other so as to enable data communication via network NW. Network NW may be a wired network (for example, intranet, Internet, wired local area network (LAN)), or a wireless network (for example, wireless LAN). Note that, sound source detection unit UD and monitoring device 10 may be directly connected without going through network NW. Monitoring device 10 and monitor 50 are installed in monitoring room RM in which a user such as an observer resides.

FIG. 2 is a diagram showing an appearance of sound source detection unit UD. Sound source detection unit UD includes microphone array MA, omnidirectional camera CA, PTZ camera CZ, and support base 70 for mechanically supporting these elements. Support base 70 has a structure in which tripod 71, two rails 72 fixed to top plate 71a of tripod 71, and first attachment plate 73 and second attachment plate 74 respectively attached to both end portions of two rails 72 are combined.

First attachment plate 73 and second attachment plate 74 are attached so as to straddle two rails 72 and have substantially the same plane. In addition, first attachment plate 73 and second attachment plate 74 can move freely on two rails 72, and are adjusted and fixed in a position to be separated or close to each other.

First attachment plate 73 is a disc-shaped plate material. Opening portion 73a is formed in a center of first attachment plate 73. In opening portion 73a, casing 15 of microphone array MA is accommodated and fixed. On the other hand, second attachment plate 74 is a substantially rectangular plate material. Opening portion 74a is formed in a portion close to an outside of second attachment plate 74. In opening portion 74a, PTZ camera CZ is accommodated and fixed.

As shown in FIG. 2, optical axis L1 of omnidirectional camera CA accommodated in casing 15 of microphone array MA and optical axis L2 of PTZ camera CZ attached to second attachment plate 74 are set so as to be parallel to each other in an initial installation state.

Tripod 71 is supported by a ground contact surface with three legs 71b and in tripod 71, a position of top plate 71a can be moved freely in a direction perpendicular to the ground contact surface by a manual operation and an orientation of top plate 71a can be adjusted in a pan direction and a tilt direction. Thereby, it is possible to set a sound pickup area of microphone array MA (in other words, an imaging area of omnidirectional camera CA) to any direction.

FIG. 3 is a block diagram showing in detail an example of an internal configuration of microphone array MA. Microphone array MA shown in FIG. 3 has a configuration including a plurality of amplifiers PA1 to PAn for amplifying each of the plurality of microphones M1 to Mn (for example, n=32) and output signals of the plurality of microphones M1 to Mn, a plurality of A/D converters A1 to An for converting analog signals output from respective amplifiers PA1 to PAn into digital signals, compression processor 25, and transmitter 26.

Compression processor 25 generates a packet of sound data based on digital sound signals output from A/D converters A1 to An. Transmitter 26 transmits the packet of the sound data generated by compression processor 25 to monitoring device 10 via network NW.

In this manner, microphone array MA amplifies the output signals of microphones M1 to Mn with amplifiers PA1 to PAn and converts the output signals of microphones M1 to Mn into digital sound signals with A/D converters A1 to An. Thereafter, microphone array MA generates a packet of sound data in compression processor 25 and transmits the packet of the sound data to monitoring device 10 via network NW.

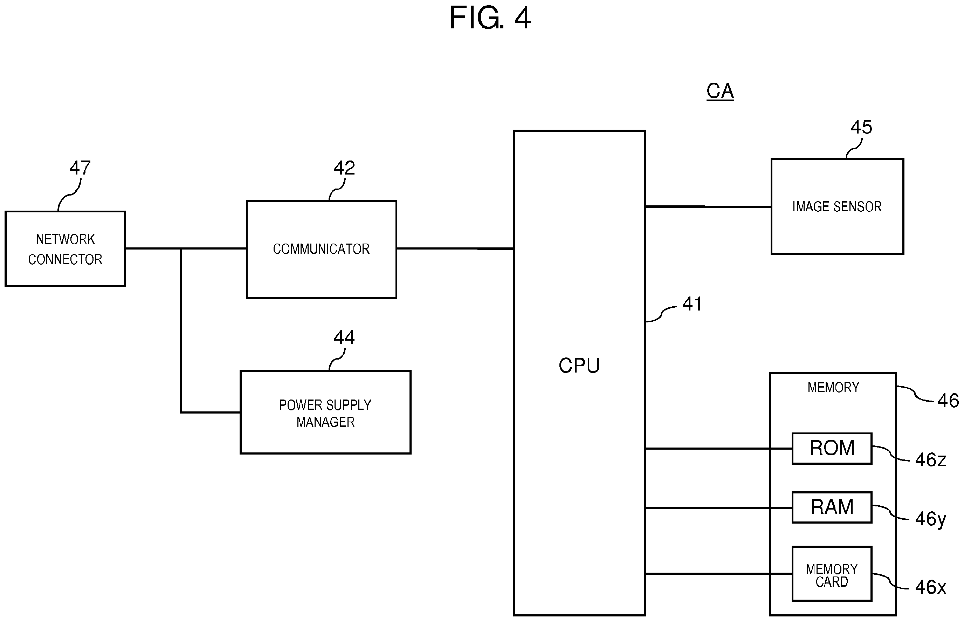

FIG. 4 is a block diagram showing in detail an example of an internal configuration of omnidirectional camera CA. Omnidirectional camera CA shown in FIG. 4 has a configuration including CPU 41, communicator 42, power supply manager 44, image sensor 45, memory 46, and network connector 47. Note that, in FIG. 4, the illustration of a fish-eye lens provided at a front stage of image sensor 45 (that is, on the right side of FIG. 4) is omitted.

CPU 41 performs a signal processing for overall control of movements of each part of omnidirectional camera CA, input and output processing of data among each of the other parts, operation processing of data, and storage processing of data. Instead of CPU 41, a processor such as a micro processing unit (MPU) or a digital signal processor (DSP) may be provided.

For example, CPU 41 generates cutout image data by cutting out an image in a specific range (direction) from omnidirectional image data by designation of user operating monitoring device 10, and stores the cutout image data in memory 46.

Image sensor 45 is configured using, for example, a complementary metal oxide semiconductor (CMOS) sensor or a charge coupled device (CCD) sensor, and acquires omnidirectional image data by imaging processing an optical image of reflected light from the imaging area collected by a fish-eye lens (not shown) on the light receiving surface.

Memory 46 includes ROM 46z that stores a program for defining a movement of omnidirectional camera CA or data for setting values, RAM 46y that stores omnidirectional image data or cutout image data from which a part of a range is cut out or work data, and memory card 46x that is connected to omnidirectional camera CA in a detachable manner and stores various data.

Communicator 42 is a network interface (I/F) for controlling data communication with network NW connected via network connector 47.

Power supply manager 44 supplies direct current power to each part of omnidirectional camera CA. Power supply manager 44 may also supply direct current power to a device connected to network NW via network connector 47.

Network connector 47 is a connector that transmits omnidirectional image data or two-dimensional panoramic image data to monitoring device 10 via network NW and can supply power via a network cable.

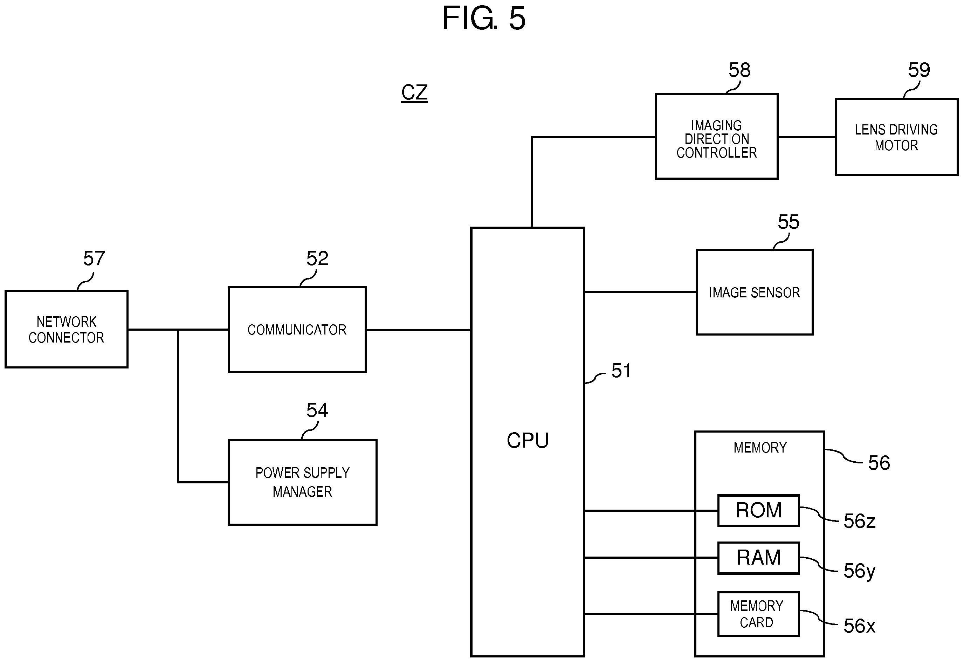

FIG. 5 is a block diagram showing in detail an example of an internal configuration of PTZ camera CZ. For each part similar to omnidirectional camera CA, reference numerals corresponding to those in FIG. 4 are given, and the description thereof will be omitted. PTZ camera CZ is a camera capable of adjusting an optical axis direction (sometimes referred to as an imaging direction) according to an angle of view change instruction from monitoring device 10.

Like omnidirectional camera CA, PTZ camera CZ includes CPU 51, communicator 52, power supply manager 54, image sensor 55, memory 56, and network connector 57, as well as imaging direction controller 58 and lens driving motor 59. When receiving an instruction to change an angle of view of monitoring device 10, CPU 51 informs imaging direction controller 58 of the angle of view change instruction.

Imaging direction controller 58 controls an imaging direction of PTZ camera CZ to at least one of a pan direction and a tilt direction according to the angle of view change instruction informed from CPU 51 and further outputs a control signal for changing a zoom magnification to lens driving motor 59, if necessary. Lens driving motor 59 drives an imaging lens according to the control signal, changes the imaging direction (the direction of optical axis L2), and adjusts a focal length of the imaging lens to change the zoom magnification.

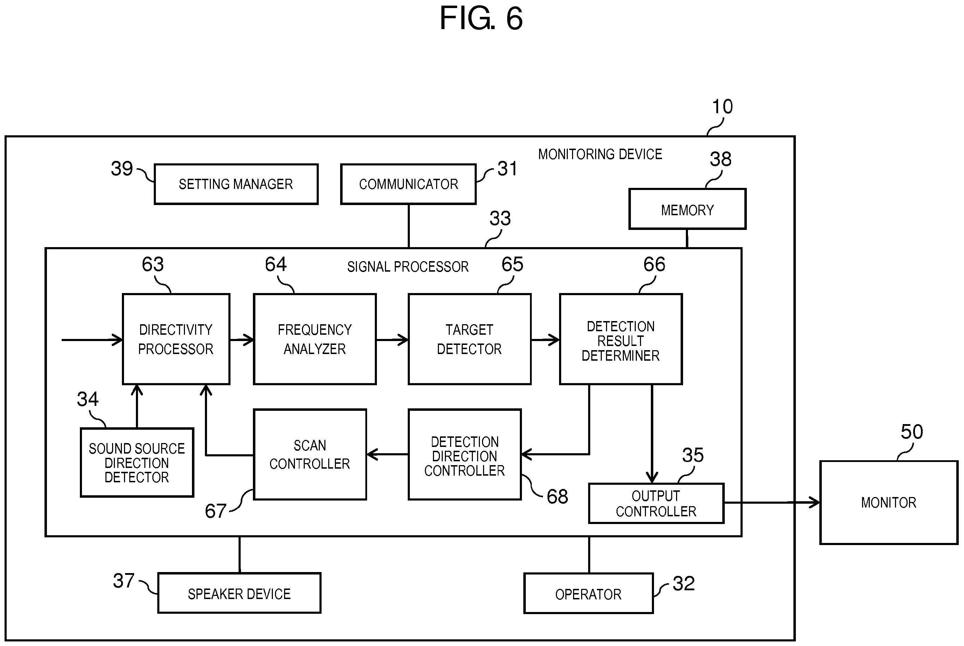

FIG. 6 is a block diagram showing in detail an example of an internal configuration of monitoring device 10. Monitoring device 10 shown in FIG. 6 has a configuration including at least communicator 31, operator 32, signal processor 33, speaker device 37, memory 38, and setting manager 39.

Signal processor 33 is configured by using, for example, a central processing unit (CPU), a micro processing unit (MPU), or a digital signal processor (DSP), and performs a control processing for overall control of movements of each part of monitoring device 10, input and output processing of data among each of the other parts, operation (calculation) processing of data, and storage processing of data. Signal processor 33 includes directivity processor 63, frequency analyzer 64, target detector 65, detection result determiner 66, scan controller 67, detection direction controller 68, sound source direction detector 34, and output controller 35. Further, monitoring device 10 is connected to monitor 50.

Sound source direction detector 34 estimates a sound source position by using sound data of sound of monitoring area 8 picked up by microphone array MA according to a known cross-power spectrum phase analysis (CSP) method, for example. In the CSP method, sound source direction detector 34 divides monitoring area 8 shown in FIG. 11 into a plurality of blocks, and when sounds are picked up by microphone array MA, sound source direction detector 34 determines whether or not there is a sound that exceeds a threshold value such as sound pressure or sound volume for each block, and then the sound source position can be roughly estimated in monitoring area 8.

Setting manager 39 has a coordinate conversion equation relating to coordinates of a position designated by a user on a screen of monitor 50 on which omnidirectional image data captured by omnidirectional camera CA is displayed, in advance. The coordinate conversion equation is an equation for converting coordinates (that is, (horizontal angle, vertical angle)) of the user designated position on the omnidirectional image data to coordinates in a direction viewed from PTZ camera CZ based on a physical distance difference between, for example, an installation position of omnidirectional camera CA (see FIG. 2) and an installation position of PTZ camera CZ (see FIG. 2).

Using the above described coordinate conversion equation held by setting manager 39, signal processor 33 uses the installation position of PTZ camera CZ (see FIG. 2) as a standard reference and calculates coordinates ($\theta$MAh, $\theta$MAv) indicating a directional direction toward an actual sound source position corresponding to the position designated by the user from the installation position of PTZ camera CZ. $\theta$MAh is a horizontal angle in a direction toward the actual sound source position corresponding to the position designated by the user as viewed from the installation position of PTZ camera CZ. $\theta$MAv is a vertical angle in a direction toward the actual sound source position corresponding to the position designated by the user as viewed from the installation position of PTZ camera CZ. As shown in FIG. 2, since a distance between omnidirectional camera CA and PTZ camera CZ is known and respective optical axes L1 and L2 are parallel, a calculation processing of the above described coordinate conversion equation can be realized by known geometric calculation, for example. A sound source position is an actual sound source position corresponding to a position designated from operator 32 by an operation of a user's finger or a stylus pen for image data displayed on monitor 50.

As shown in FIG. 2, in the present exemplary embodiment, omnidirectional camera CA and microphone array MA are disposed so that the optical axis direction of omnidirectional camera CA and the central axis of the casing of microphone array MA are coaxial. Therefore, coordinates of the designated position derived by omnidirectional camera CA according to the user designation for monitor 50 on which omnidirectional image data is displayed, can be regarded as being a same as an emphasizing direction of the sound (also referred to as directional direction) viewed from microphone array MA. In other words, when there is a user designation for monitor 50 on which an omnidirectional image data is displayed, monitoring device 10 transmits coordinates of a designated position on the omnidirectional image data to omnidirectional camera CA. As a result, omnidirectional camera CA uses the coordinates of the designated position transmitted from monitoring device 10 to calculate coordinates (horizontal angle, vertical angle) indicating the direction of the sound source position corresponding to the designated position viewed from omnidirectional camera CA. Since the calculation processing in omnidirectional camera CA is a well-known technology, and therefore description thereof will be omitted. Omnidirectional camera CA transmits a calculation result of the coordinates indicating the direction of the sound source position to monitoring device 10. Monitoring device 10 can use the coordinates (horizontal angle, vertical angle) calculated by omnidirectional camera CA as coordinates (horizontal angle, vertical angle) indicating the direction of the sound source position as viewed from microphone array MA.

However, when omnidirectional camera CA and microphone array MA are not disposed coaxially, setting manager 39 needs to convert coordinates derived by omnidirectional camera CA into coordinates in a direction viewed from microphone array MA according to a method disclosed in, for example, PTL 3.

Setting manager 39 holds first threshold value th1 and second threshold value th2 to be compared with sound pressure p for each pixel calculated by signal processor 33. Sound pressure p is used as an example of a sound parameter relating to a sound source, represents the magnitude of a sound picked up by microphone array MA, and is distinguished from a sound volume representing the magnitude of a sound output from speaker device 37. First threshold value th1 and second threshold value th2 are values to be compared with sound pressure of a sound generated in monitoring area 8 and are set to predetermined values for determining a sound emitted by unmanned aerial vehicle dn, for example. Further, a plurality of threshold values can be set, and in the present exemplary embodiment, two values are set, for example, first threshold value th1 and second threshold value th2 that is larger than first threshold value th1 (first threshold value th1 < second threshold th2). In the present exemplary embodiment, three or more threshold values may be set.

As will be described later, region R1 (see FIG. 15) of pixels obtained sound pressure larger than the second threshold value th2 is rendered in red, for example, on monitor 50 on which omnidirectional image data is displayed. Region B1 of pixels obtained sound pressure larger than the first threshold value th1 and less than or equal to the second threshold value th2 is rendered in blue, for example, on monitor 50 on which omnidirectional image data is displayed. Region N1 of sound pressure of pixels having less than or equal to the first threshold value th1 is rendered colorless, for example, on monitor 50 on which the omnidirectional image data is displayed, that is, it is not different from the display color of the omnidirectional image data.

Communicator 31 receives omnidirectional image data or cutout image data transmitted by omnidirectional camera CA and sound data transmitted by microphone array MA, and outputs omnidirectional image data, cutout image data, and sound data to signal processor 33.

Operator 32 is a user interface (UI) for informing signal processor 33 of content of an input operation by a user, and is configured of a pointing device such as a mouse, a keyboard, or the like. Operator 32 may be configured using, for example, a touch panel or a touch pad disposed corresponding to a screen of monitor 50 and capable of direct input operation by a user's finger or a stylus pen.

When a red region R1 of sound pressure heat map MP (see FIG. 15) displayed on monitor 50 is designated by a user, operator 32 acquires coordinate data indicating a designated position and outputs the coordinate data to signal processor 33. Signal processor 33 reads sound data corresponding to coordinate data of a designated position from memory 38 and forms a directivity from microphone array MA in a direction toward a sound source position corresponding to a designated position and then outputs the sound data to speaker device 37. As a result, a user can clearly confirm not only unmanned aerial vehicle dn but also sounds at other designated positions in an emphasized state.

Memory 38 is configured of a ROM or a RAM. Memory 38, for example, holds various data including sound data in a certain section, setting information, programs, or the like. Memory 38 has a pattern memory in which unique sound patterns are registered in each unmanned aerial vehicle dn. Memory 38 stores data of sound pressure heat map MP. Further, in memory 38, identification mark mk (see FIG. 13) schematically representing a position of unmanned aerial vehicle dn is registered. Identification mark mk used here is, for example, a star shaped symbol. Note that, identification mark mk is not limited to a star shape, but may be a symbol or a letter such as a circle shape or a quadrangle shape, or a "⊓̶⊔" shape reminiscent of an unmanned aerial vehicle. In a daytime and a nighttime, a display mode of identification mark mk may be changed, for example, it may be a star shape in the daytime and a quadrangle shape which is not mistaken as a star in the nighttime. Further, identification mark mk may be dynamically changed. For example, a star shaped symbol may be displayed blinking or rotating, thereby further attracting attention to a user.

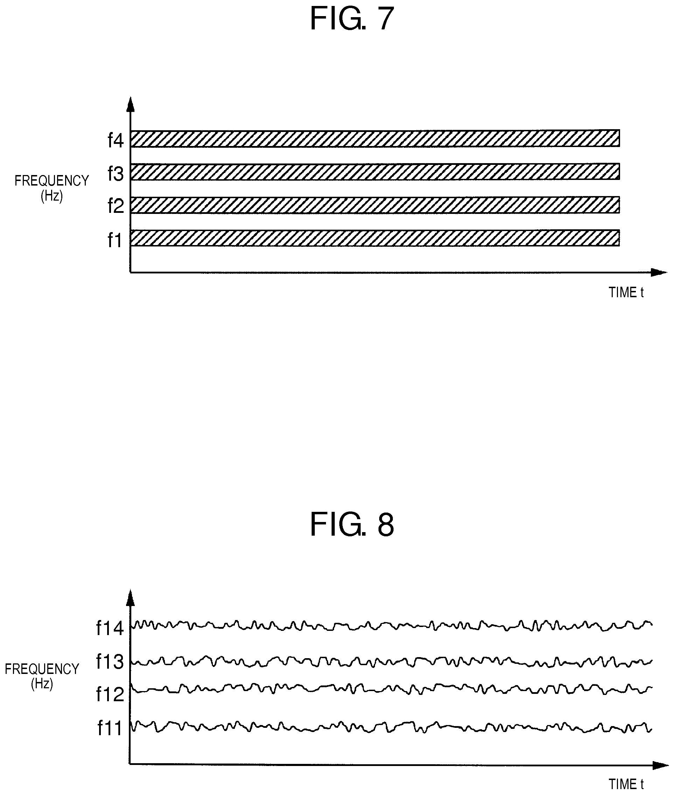

FIG. 7 is a timing chart showing an example of patterns of detection sounds of unmanned aerial vehicle dn registered in memory 38. The patterns of the detection sounds shown in FIG. 7 are a combination of frequency patterns, and include sounds of four frequencies f1, f2, f3, and f4 generated by rotation of four rotors mounted on multicopter type unmanned aerial vehicle dn. Signals of the respective frequencies are, for example, signals of frequencies of different sounds generated accompanying rotation of a plurality of feathers pivotally supported by each rotor.

In FIG. 7, a region of a frequency indicated by slanted lines is a region where sound pressure is high. Note that, the pattern of the detection sound may include not only a number of sounds of a plurality of frequencies or sound pressure but also other sound information. The other sound information is, for example, a sound pressure ratio representing a ratio of sound pressure of each frequency, or the like. Here, as an example, a detection of unmanned aerial vehicle dn is determined by whether or not sound pressure of each frequency included in the pattern of the detection sound exceeds a threshold value.

Directivity processor 63 performs the aforementioned directivity forming process (beam forming) using sound signals picked up by nondirectional microphones M1 to Mn (also referred to as sound data), and performs a processing for extracting sound data in which any direction is set as a directional direction. Directivity processor 63 can also perform a processing for extracting sound data in which range of any direction is set as a directional range. Here, the directional range is a range including a plurality of adjacent directional directions, and is intended to include spread of directional directions to some extent as compared with the directional direction.

Frequency analyzer 64 performs frequency analysis processing on the sound data extracted in the directivity direction by directivity processor 63. In the frequency analysis processing, a frequency and sound pressure included in the sound data of the directional direction are detected.

FIG. 8 is a timing chart showing an example of frequency changes of detection sound signals obtained as a result of a frequency analysis processing. In FIG. 8, four frequencies f11, f12, f13, f14 and sound pressure of each frequency are obtained as the detection sound signals (that is, detection sound data). In the figure, fluctuation of each frequency that changes irregularly is, for example, due to rotation fluctuation of the rotor that changes when unmanned aerial vehicle dn controls a posture of unmanned aerial vehicle dn 's own fuselage.

Target detector 65 performs a detection processing of unmanned aerial vehicle dn. In the detection processing of unmanned aerial vehicle dn, target detector 65 compares patterns of detection sounds obtained as a result of the frequency analysis processing (see FIG. 8) (frequencies f11 to f14) with patterns of the detection sound registered in advance in a pattern memory of memory 38 (See FIG. 7) (frequencies f1 to f4). Target detector 65 determines whether or not the patterns of the detection sounds of both are approximate.

Whether the patterns of both are approximate or not is determined as follows, for example. When sound pressures of at least two frequencies included in the detection sound data, among the four frequencies f1, f2, f3, and f4, exceed a threshold value respectively, it is determined that the sound patterns are approximate, and target detector 65 detects unmanned aerial vehicle dn. Unmanned aerial vehicle dn may be detected when other conditions are satisfied.

When it is determined that there is no unmanned aerial vehicle dn, detection result determiner 66 instructs detection direction controller 68 to transit to the detection of unmanned aerial vehicle dn in a next directional direction. When it is determined that there is unmanned aerial vehicle dn as a result of the scanning in the directional direction, detection result determiner 66 informs output controller 35 of a detection result of unmanned aerial vehicle dn. Note that, the detection result includes information of detected unmanned aerial vehicle dn. The information of unmanned aerial vehicle dn includes, for example, identification information of unmanned aerial vehicle dn and position information (for example, direction information) of unmanned aerial vehicle dn in the sound pickup space.

Detection direction controller 68 controls a direction for detecting unmanned aerial vehicle dn in the sound pickup space based on an instruction from detection result determiner 66. For example, detection direction controller 68 sets any direction of directional range BF1 including the sound source position estimated by sound source direction detector 34 as a detection direction in an entire sound pickup space.

Scan controller 67 instructs directivity processor 63 to perform the beam forming of the detection direction set by detection direction controller 68 as the directional direction.

Directivity processor 63 performs the beam forming for the directional direction instructed from scan controller 67. In an initial setting, directivity processor 63 sets an initial position in directional range BF1 (see FIG. 11) including the sound source position estimated by sound source direction detector 34 as directional direction BF2. Directional direction BF2 is sequentially set by detection direction controller 68 in directional range BF1.

On the basis of the omnidirectional image data captured by omnidirectional camera CA and the sound data picked up by microphone array MA, the output controller 35 calculates sound pressure for every pixel configuring the omnidirectional image data. The sound pressure calculation processing is a well-known technology, and the detailed description of the processing is omitted. As a result, output controller 35 generates sound pressure heat map MP by assigning the calculated value of the sound pressure to the position of the corresponding pixel for every pixel configuring the omnidirectional image data. Further, output controller 35 performs a color conversion processing on the sound pressure value of each pixel of generated sound pressure heat map MP, and then generates sound pressure heat map MP as shown in FIG. 15.

Note that, output controller 35 generates sound pressure heat map MP by assigning the sound pressure value calculated on a pixel-by-pixel basis to the position of the corresponding pixel, however, output controller 35 may not calculate the sound pressure for every pixel but may calculate an average value of the sound pressure values in units of pixel blocks composed of a predetermined number (for example, four) of pixels, and may generate sound pressure heat map MP by assigning the average value of the sound pressure values corresponding to the predetermined number of corresponding pixels.

Further, output controller 35 controls each movement of monitor 50 and speaker device 37, and also outputs the omnidirectional image data or the cutout image data transmitted from omnidirectional camera CA to monitor 50 for displaying, and further outputs sound data transmitted from microphone array MA to speaker device 37. When unmanned aerial vehicle dn is detected, output controller 35 outputs identification mark mk representing unmanned aerial vehicle dn to monitor 50 so as to be superimposed on an omnidirectional image and displays identification mark mk.

Output controller 35 also uses the sound data picked up by microphone array MA and coordinates indicating the direction of the sound source position derived by omnidirectional camera CA and emphasizes the sound data in the directional direction by performing the directivity formation processing of the sound data picked up by microphone array MA. The directivity forming processing of the sound data is a known technology disclosed in, for example, PTL 3.

Speaker device 37 outputs sound data picked up by microphone array MA or sound data in which microphone array MA picked up sound and directivity is formed by signal processor 33, as a sound. Note that, speaker device 37 may be configured as a device separate from monitoring device 10.

Movement of unmanned aerial vehicle detection system 5 having the above described configuration is shown.

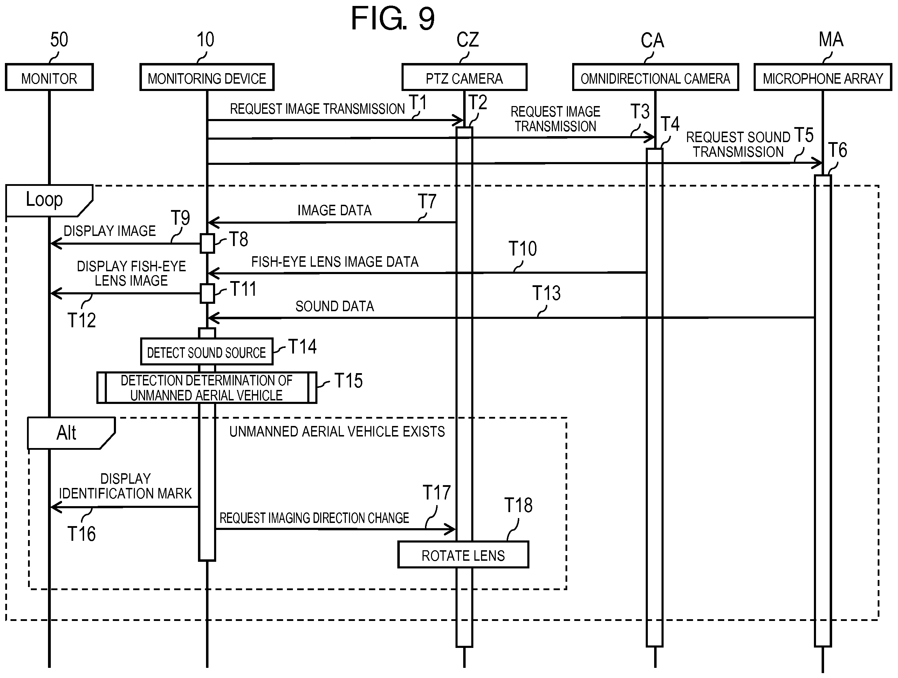

FIG. 9 is a sequence diagram showing an example of detection movement of an unmanned aerial vehicle in unmanned aerial vehicle detection system 5 of the first exemplary embodiment. When power is supplied to each device (for example, monitor 50, monitoring device 10, PTZ camera CZ, omnidirectional camera CA, microphone array MA) of unmanned aerial vehicle detection system 5, unmanned aerial vehicle detection system 5 starts the movement.

In an initial movement, monitoring device 10 performs an image transmission request to PTZ camera CZ (T1). In accordance with the request, PTZ camera CZ starts imaging processing in response to application of the power (T2). Similarly, monitoring device 10 performs an image transmission request to omnidirectional camera CA (T3). In accordance with the request, omnidirectional camera CA starts imaging processing in response to application of the power (T4). Monitoring device 10 performs a sound transmission request to microphone array MA (T5). In accordance with the request, microphone array MA starts pickup sound processing in response to application of the power (T6).

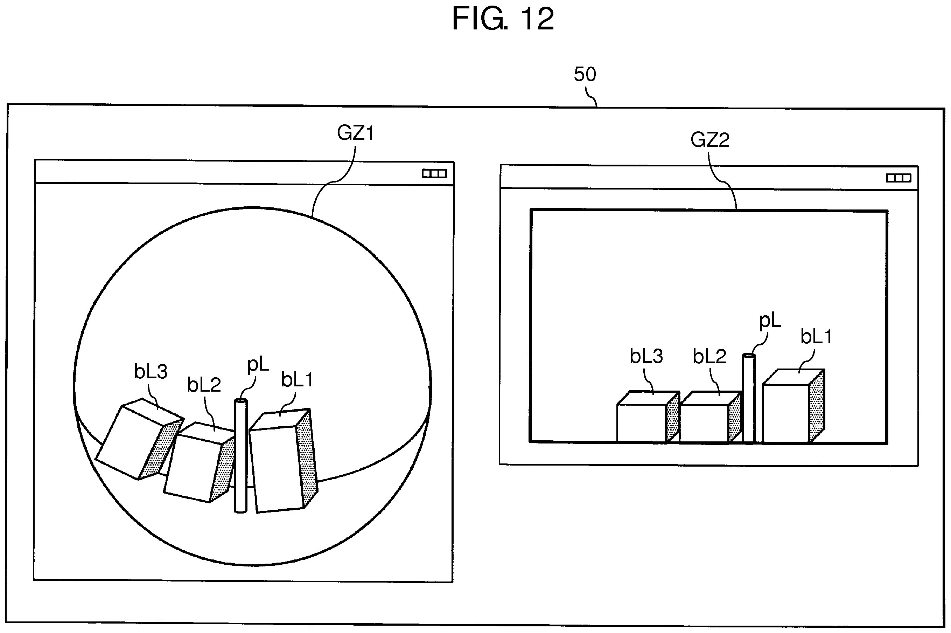

Upon completion of the initial movement, PTZ camera CZ transmits captured image (for example, still image, moving image) data obtained by the imaging to monitoring device 10 via network NW (T7). Monitoring device 10 converts the captured image data transmitted from PTZ camera CZ into display data such as NTSC (T8) and outputs the display data to monitor 50 (T9). Upon inputting the display data, monitor 50 displays PTZ image GZ2 (see FIG. 12 or the like) from PTZ camera CZ on the screen.

Similarly, omnidirectional camera CA transmits omnidirectional image (for example, still image, moving image) data obtained by the imaging to monitoring device 10 via network NW (T10). Monitoring device 10 converts the omnidirectional image data transmitted from omnidirectional camera CA into display data such as NTSC (T11) and outputs the display data to monitor 50 (T12). Upon inputting the display data, monitor 50 displays omnidirectional image GZ1 (see FIG. 12 or the like) from omnidirectional camera CA on the screen.

Microphone array MA encodes the sound data of the sounds obtained by picking up sounds via network NW and transmits the encoded sound data to monitoring device 10 (T13). In monitoring device 10, the sound source direction detector 34 estimates the sound source position in monitoring area 8 (T14). The estimated sound source position is used as a standard position of the directional range BF1 (see FIG. 11) which is necessary for an initial directional direction to be set when monitoring device 10 detects unmanned aerial vehicle dn.

Monitoring device 10 performs detection determination of unmanned aerial vehicle dn (T15). Details of a detection determination processing of unmanned aerial vehicle dn will be described later.

When unmanned aerial vehicle dn is detected as a result of the detection determination processing, output controller 35 in monitoring device 10 superimposes identification mark mk representing unmanned aerial vehicle dn existing in the directional direction determined in procedure T15 on omnidirectional image GZ1 displayed on the screen of monitor 50, and then displays identification mark mk (T16).

Output controller 35 transmits information relating to the directional direction obtained from procedure T15 to PTZ camera CZ and performs a request for changing an imaging direction of PTZ camera CZ to the directional direction (in other words, an angle of view change instruction) (T17). When PTZ camera CZ receives the information relating to the directional direction (that is, the angle of view change instruction), imaging direction controller 58, based on the information relating to the directional direction, drives lens driving motor 59, changes optical axis L2 of an imaging lens of PTZ camera CZ, and changes the imaging direction to the directional direction (T18). At the same time, imaging direction controller 58 changes zoom magnification of the imaging lens of PTZ camera CZ to a value set in advance, a value corresponding to a ratio occupied in the captured image of unmanned aerial vehicle dn, or the like.

On the other hand, as a result of the detection determination processing in procedure T15, if unmanned aerial vehicle dn is not detected, the processing of T16, T17, and T18 is not performed.

Thereafter, the processing of unmanned aerial vehicle detection system 5 returns to procedure T7, and the same processing is repeated until a predetermined event such as turning off the power is detected.

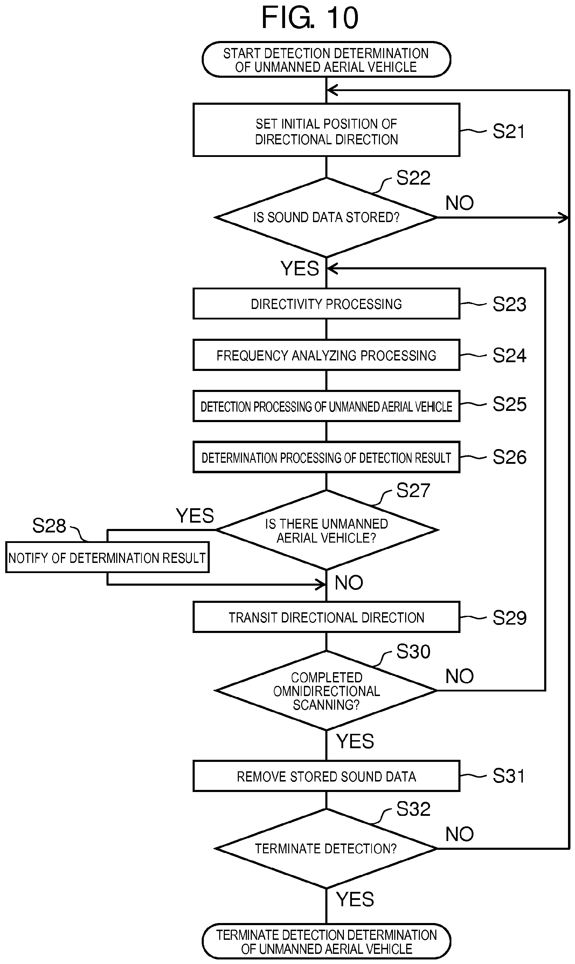

FIG. 10 is a flowchart showing an example of details of an unmanned aerial vehicle detection determination procedure of procedure T15 in FIG. 9. In sound source detector UD, directivity processor 63 sets directional range BF1 (see FIG. 11) based on the sound source position estimated by sound source direction detector 34 as an initial position of the directional direction BF2 (see FIG. 11) (S21).

FIG. 11 is a diagram showing an example of a state in which directional direction BF2 is sequentially scanned within monitoring area 8 and unmanned aerial vehicle dn is detected. Note that, the initial position is not limited to directional range BF1 based on the sound source position of monitoring area 8 estimated by sound source director 34, any position designated by a user is set as an initial position, and inside monitoring area 8 may be sequentially scanned. Since the initial position is not limited, even when the sound source included in directional range BF1 based on an estimated sound source position is not an unmanned aerial vehicle, it is possible to detect an unmanned aerial vehicle flying in another directional direction at an early stage.

The directivity processor 63 determines whether or not the sound data, which is picked up by microphone array MA and converted into digital values by A/D converters An1 to An, has been temporarily stored in memory 38 (S22). When it is not stored, the processing of directivity processor 63 returns to procedure S21.

When the sound data picked up by microphone array MA is temporarily stored in memory 38 (YES in S22), directivity processor 63 performs the beam forming for any directional direction BF2 in directional range BF1 of monitoring area 8 and performs an extraction processing on the sound data of directional direction BF2 (S23).

Frequency analyzer 64 detects a frequency and sound pressure of the extracted sound data (S24).

Target detector 65 compares the pattern of the detection sound registered in the pattern memory of memory 38 with a pattern of a detection sound obtained as a result of the frequency analysis processing to perform a detection of an unmanned aerial vehicle (S25).

Detection result determiner 66 informs output controller 35 of the result of the comparison, and informs detection direction controller 68 about the detection direction transition (S26).

For example, target detector 65 compares patterns of the detection sounds obtained as a result of the frequency analysis processing with the four frequencies f1, f2, f3, and f4 registered in the pattern memory of memory 38. As a result of the comparison, when target detector 65 has at least two identical frequencies in patterns of both detection sounds, and the sound pressures of these frequencies are larger than a first threshold th1, the patterns of the both detection sounds are approximated, and it is determined that unmanned aerial vehicle dn exists.

Although it is assumed herein that at least two frequencies coincide, however, when one frequency coincides and the sound pressure of this frequency is larger than the first threshold th1, target detector 65 may determine the detection sound is approximated.

Target detector 65 may set an allowable frequency error for each frequency, and determine the presence or absence of the approximation on the assumption that frequencies within the error range are the same frequency.

Further, in addition to the comparison of the frequencies and the sound pressures, target detector 65 may determine by addition to determination condition that sound pressure ratios of the sounds of the respective frequencies substantially coincide. In this case, since the determination condition becomes strict, sound source detection unit UD can easily identify detected unmanned aerial vehicle dn as a preregistered target (for example, unmanned aerial vehicle dn which is a moving object) thereby improving detection accuracy of unmanned aerial vehicle dn.

As a result of step S26, detection result determiner 66 determines whether or not unmanned aerial vehicle dn exists (S27).

When there is unmanned aerial vehicle dn, detection result determiner 66 informs output controller 35 that unmanned aerial vehicle dn exists (detection result of unmanned aerial vehicle dn) (S28).

On the other hand, if there is no unmanned aerial vehicle dn in step S27, scan controller 67 moves the directional direction BF2 of scan target in monitoring area 8 in a next different direction (S29). Note that, information of the detection result of unmanned aerial vehicle dn may be performed collectively after completion of an omnidirectional scanning, not at the timing when the detection processing of one directional direction ends.

An order in which directional direction BF2 is sequentially moved in monitoring area 8, for example, within directional range BF1 of monitoring area 8 or within an entire range of monitoring area 8, may be a spiral (coiled) order from an outer circumference toward an inner circumference or from the inner circumference toward the outer circumference.

Detection direction controller 68 does not continuously scan the directional direction like one stroke, but may set a position in advance in monitoring area 8, and move the directional direction BF2 to each position in any order. As a result, monitoring device 10 can start a detection processing from a position where, for example, unmanned aerial vehicle dn is likely to intrude, so that the detection processing can be made more efficient.

Scan controller 67 determines whether or not scanning in all directions in monitoring area 8 is completed (S30). When the omnidirectional scanning is not completed (NO in S30), the processing of directivity processor 63 returns to step S23 and the same operation is performed. That is, directivity processor 63 performs the beam forming in directional direction BF2 of the position moved in step S29, and extracts the sound data of directional direction BF2. As a result, even if one unmanned aerial vehicle dn is detected, sound source detection unit UD continues to detect unmanned aerial vehicle dn that may be present, so that detection of a plurality of unmanned aerial vehicles dn is possible.

On the other hand, when the omnidirectional scanning is completed in step S30 (YES in S30), directivity processor 63 removes sound data temporarily stored in memory 38 and collected by microphone array MA (S31).

After removing the sound data, signal processor 33 determines whether or not to terminate the detection processing of unmanned aerial vehicle dn (S32). The detection processing of unmanned aerial vehicle dn is terminated in accordance with a predetermined event. For example, the number of times unmanned aerial vehicle dn was not detected in step S6 may be stored in memory 38, and in a case where the number is equal to or more than a predetermined number, the detection processing of unmanned aerial vehicle dn may be terminated. Signal processor 33 may terminate the detection processing of unmanned aerial vehicle dn based on time-up by timer or a user operation on a user Interface (UI) included in operator 32 (not shown). In addition, it may be terminated when the power supply of monitoring device 10 is turned off.

Note that, in the processing of step S24, frequency analyzer 64 analyzes the frequency and also measures the sound pressure of the frequency. When sound pressure level measured by frequency analyzer 64 gradually increases with the lapse of time, detection result determiner 66 may determine that unmanned aerial vehicle dn is approaching sound source detection unit UD.

For example, when sound pressure level of a predetermined frequency measured at time t11 is smaller than sound pressure level of the same frequency measured at time t12 after the time t11, the sound pressure increases with the lapse of time, accordingly it may be determined that unmanned aerial vehicle dn is approaching. Also, the sound pressure level may be measured three or more times, and it may be determined that unmanned aerial vehicle dn is approaching based on transition of a statistical value (for example, dispersion value, average value, maximum value, minimum value, or the like).

When the measured sound pressure level is larger than third threshold th3 which is warning level, detection result determiner 66 may determine that unmanned aerial vehicle dn has intruded a warning area.

Note that, third threshold value th3 is, for example, a value larger than second threshold value th2. The warning area is, for example, a same area as monitoring area 8 or an area included in monitoring area 8 and narrower than monitoring area 8. The warning area is, for example, an area in which intrusion of unmanned aerial vehicle dn is regulated. Approach determination and intrusion determination of unmanned aerial vehicle dn may be executed by detection result determiner 66.

FIG. 12 is a diagram showing an example of display screens of monitor 50 when unmanned aerial vehicle dn is not detected. On a display screen of monitor 50, omnidirectional image GZ1 by omnidirectional camera CA and PTZ image GZ2 by PTZ camera CZ are displayed in a contrast manner. In omnidirectional image GZ1, three buildings bL1, bL2, bL3 and chimney pL are shown but unmanned aerial vehicle dn is not shown. Here, although omnidirectional image GZ1 and PTZ image GZ2 are contrasted and displayed, only one of them may be selected and displayed, or these images may be displayed by switching at certain time intervals.

FIG. 13 is a diagram showing an example of display screens of monitor 50 when unmanned aerial vehicle dn is detected. In omnidirectional image GZ1 by omnidirectional camera CA displayed on the display screen of monitor 50, in addition to the three buildings bL1, bL2, bL3 and the chimney pL, identification mark mk representing unmanned aerial vehicle dn flying above the buildings and the chimney is rendered with a star symbol. On the other hand, in PTZ image GZ2 by PTZ camera CZ, three buildings bL1, bL2, bL3 and the chimney pL are still shown, but unmanned aerial vehicle dn is not shown. That is, in FIG. 13, after monitoring device 10 displays identification mark mk in procedure T16 in FIG. 9, an imaging direction is requested to PTZ camera CZ in procedure T17, an imaging lens is moved by PTZ camera CZ in procedure T18, and PTZ image GZ2 in a state before the optical axis direction is changed is displayed.

FIG. 14 is a diagram showing an example of display screens of monitor 50 when unmanned aerial vehicle dn is detected and PTZ camera CZ changes an optical axis direction in association with a detection. PTZ image GZ2 by PTZ camera CZ is an image zoomed up toward unmanned aerial vehicle dn. In PTZ image GZ2, the three buildings bL1, bL2, bL3, and the chimney pL no longer show on from an angle of view and unmanned aerial vehicle dn is zoomed in and displayed.

That is, in FIG. 14, monitoring device 10 rotates the imaging lens of PTZ camera CZ in procedure T18 of FIG. 9 to change the optical axis direction thereof, and further displays PTZ image GZ2 in a state after zooming up.

Here, identification mark mk is superimposed on omnidirectional image GZ1 captured by omnidirectional camera CA, and unmanned aerial vehicle dn is directly displayed in PTZ image GZ2 captured by PTZ camera CZ. This is because it is difficult to distinguish unmanned aerial vehicle dn even if the image of unmanned aerial vehicle dn appears in omnidirectional image GZ1 as it is. On the other hand, since PTZ image GZ2 captured by PTZ camera CZ is the zoomed up image, when the image of unmanned aerial vehicle dn appears on the display screen, unmanned aerial vehicle dn is clearly displayed. Therefore, it is also possible to specify a model of unmanned aerial vehicle dn from an outline of unmanned aerial vehicle dn which is clearly displayed. In this way, sound source detection unit UD can appropriately display unmanned aerial vehicle dn in consideration of visibility of an image displayed on the display screen of monitor 50.

Note that, unmanned aerial vehicle dn itself may be displayed as it is on omnidirectional image GZ1 instead of displaying identification mark so as to be the same display or different display between omnidirectional image GZ1 and PTZ image GZ2, or identification mark mk may be superimposed and displayed on PTZ image GZ2.

FIG. 15 is a diagram showing another example of display screens of monitor 50 when unmanned aerial vehicle dn is detected and PTZ camera CZ changes the optical axis direction in association with the detection. The display screen of monitor 50 shown in FIG. 15 is displayed, for example, when a user instructs a different display menu (not shown) via operator 32 of monitoring device 10. In the display screen of FIG. 15, it is indicated that other sound source exists which has the same sound pressure value as unmanned aerial vehicle dn, where the calculated value of the sound pressure for each pixel configuring the omnidirectional image data is equal to that of unmanned aerial vehicle dn. In omnidirectional image GZ1, in addition to identification mark mk representing unmanned aerial vehicle dn, another identification mark mc representing the other sound source is superimposed. It is preferable that the other identification mark mc is rendered in a display form different from that of identification mark mk, and in FIG. 15, it is rendered with a circular symbol. Examples of different display forms include symbols such as ellipses, triangles, or question marks, and letters. Also, as with identification mark mk, the other identification mark mc may be dynamically displayed.

Furthermore, in omnidirectional image GZ1, a sound pressure map representing the sound pressure of each pixel is generated by output controller 35, and sound pressure heat map MP obtained by performing a color conversion processing is superimposed on an area in which the calculated value of the sound pressure exceeds the threshold value. Here, in sound pressure heat map MP, region R1 in which the sound pressure exceeds second threshold value th2 is rendered in red (large dot group in the figure), and region B1 in which the sound pressure is larger than first threshold value th1 and less than or equal to second threshold value th2 is rendered in blue (small dot group in the figure). Region N1 in which the sound pressure is less than or equal to first threshold value th1 is rendered transparent (nothing is displayed in the figure).

Further, even though the other identification mark mc representing the position of the other sound source is rendered on same omnidirectional image GZ1 as identification mark mk representing unmanned aerial vehicle dn, as sound pressure heat map MP is rendered, circumstances surrounding unmanned aerial vehicle dn become well understood. For example, when the sound source which has not yet been registered is flying as unmanned aerial vehicle dn, a user points a position of the sound source represented by the other identification mark mc or points red region R1 of sound pressure heat map MP from the display screen of monitor 50. Output controller 35 of monitoring device 10 causes PTZ camera CZ to zoom up the position of the sound source or the red region R1 to obtain PTZ image GZ2 after the zoom up and displays PTZ image GZ2 on monitor 50, therefore, it is possible to quickly and accurately ascertain unidentified sound sources. As a result, even if unregistered unmanned aerial vehicle dn exists, a user can detect unmanned aerial vehicle dn.

Note that, a display form in which only the other identification mark mc is rendered or a display form in which only sound pressure heat map MP is rendered may be set on same omnidirectional image GZ1 as identification mark mk. A user can select any display form of these display screens.

As described above, in unmanned aerial vehicle detection system 5 of the present exemplary embodiment, omnidirectional camera CA images monitoring area 8 (imaging area). Microphone array MA picks up sounds in monitoring area 8. Monitoring device 10 detects unmanned aerial vehicle dn appearing in monitoring area 8 by using the sound data picked up by microphone array MA. Signal processor 33 in monitoring device 10 superimposes identification mark mk (first identification information) obtained by converting unmanned aerial vehicle dn into visual information in the captured image of omnidirectional camera CA (that is, omnidirectional image GZ1) on omnidirectional image GZ1 of monitoring area 8 and displays superimposed identification mark mk on monitor 50. As a result, unmanned aerial vehicle detection system 5 can rapidly and accurately determine an existence and a position of desired unmanned aerial vehicle dn by using omnidirectional image GZ1 captured by omnidirectional camera CA.

In unmanned aerial vehicle detection system 5, PTZ camera CZ capable of adjusting the optical axis direction images monitoring area 8. Signal processor 33 outputs to PTZ camera CZ an instruction for adjusting the optical axis direction in a direction corresponding to the detection result of unmanned aerial vehicle dn. Based on the instruction, monitor 50 displays the image (that is, PTZ image GZ2) captured by PTZ camera CZ in which the optical axis direction is adjusted. Thereby, in unmanned aerial vehicle detection system 5, an observer who is a user can clearly view and specify an exact model of unmanned aerial vehicle dn from the image of undistorted unmanned aerial vehicle dn captured by PTZ camera CZ.

Monitor 50 displays omnidirectional image GZ1 of omnidirectional camera CA including identification mark mk of unmanned aerial vehicle dn and the captured image of PTZ camera CZ (that is, PTZ image GZ2) in contrast. As a result, the observer who is the user, for example, alternately compares omnidirectional image GZ1 and PTZ image GZ2, thereby it is possible to accurately grasp the model of unmanned aerial vehicle dn and the surrounding circumstances where unmanned aerial vehicle dn exists.

Signal processor 33 detects at least one other sound source in monitoring area 8 and displays as the other identification mark mc (second identification information), which is obtained by converting the other sound source into visual information in the captured image of the omnidirectional camera and different from identification mark mk, on monitor 50. As a result, the observer who is the user can grasp an unidentified sound source which is not desired unmanned aerial vehicle dn. The user can accurately check whether or not the unidentified sound source is an unregistered unmanned aerial vehicle.

Further, signal processor 33 calculates the sound pressure value of each pixel in the captured image of monitoring area 8, superimposes the sound pressure value of each pixel in the captured image on the omnidirectional image data of imaging area 8 so that it can be identified by a plurality of different color gradations according to the sound pressure value of each pixel as sound pressure heat map MP, and displays the superimposed sound pressure value of each pixel on monitor 50. Thus, a user can compare sound pressure of the sound emitted by unmanned aerial vehicle dn and surrounding sound pressure in contrast, accordingly the sound pressure of the unmanned aerial vehicle becomes relative and visually recognizable.

First Modification Example of First Embodiment

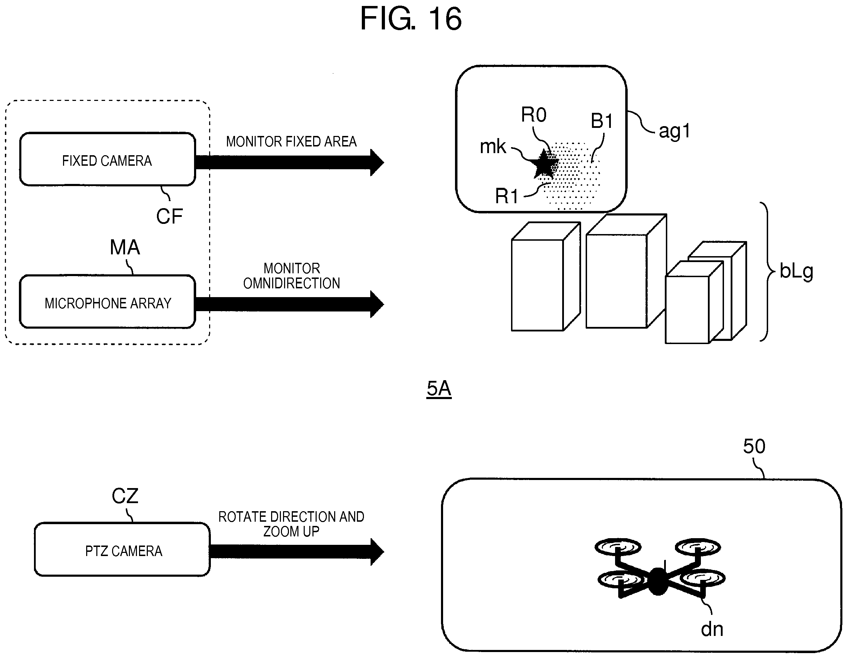

FIG. 16 is a diagram showing an example of a schematic configuration of unmanned aerial vehicle detection system 5A according to a first modification example of the first exemplary embodiment. In the first exemplary embodiment, the camera disposed on the same axis as microphone array MA is omnidirectional camera CA, but in the first modification example of the first exemplary embodiment (hereinafter referred to as "first modification example"), fixed camera CF is disposed so as to coincide with a center axis of microphone array MA and its own optical axis.

Fixed camera CF is a camera having a predetermined angle of view with an optical axis fixed in a specific direction, and is installed in advance so as to be able to image, for example, a space expected to fly by unmanned aerial vehicle dn. Here, angle of view ag1 of fixed camera CF is set above building group bLg.

When unmanned aerial vehicle dn is detected, a camera that changes an imaging direction to a directional direction of sound picked up by microphone array MA (that is, a direction from microphone array MA to unmanned aerial vehicle dn) and images unmanned aerial vehicle dn as a subject is PTZ camera CZ as in the first exemplary embodiment.

In unmanned aerial vehicle detection system 5A of the first modification example, omnidirectional camera CA is changed to fixed camera CF in the sequence diagram shown in FIG. 9, and detection movement of unmanned aerial vehicle dn is performed in the same sequence as in the first exemplary embodiment.

As described above, when unmanned aerial vehicle dn is detected and unmanned aerial vehicle dn enters angle of view ag1 monitored by fixed camera CF, unmanned aerial vehicle detection system 5A displays identification mark mk representing unmanned aerial vehicle dn on an image captured by fixed camera CF on monitor 50 and further displays a zoomed up image taken by PTZ camera CZ on monitor 50. When unmanned aerial vehicle dn does not exist at angle of view ag1 monitored by fixed camera CF, imaging by PTZ camera CZ in imaging direction requested from monitoring device 10 is not performed.

Here, in an image captured by angle of view ag1 displayed on monitor 50, as in the first exemplary embodiment, region R1 of pixels obtained sound pressure larger than second threshold th2 is rendered in red, for example. Region B1 of pixels obtained sound pressure larger than first threshold value th1 and less than or equal to second threshold value th2 is rendered in blue, for example. Further, region R0 of pixels obtained sound pressure larger than third threshold th3 (> th2), on which identification mark mk is superimposed, is rendered in purple, for example.

Therefore, in unmanned aerial vehicle detection system 5A of first modification example, the detection processing of unmanned aerial vehicle dn is performed only a limited area corresponding to the image captured by fixed camera CF, for example, unmanned aerial vehicle dn is expected to fly, so that load of the detection processing of unmanned aerial vehicle dn can be reduced and speed of the detection processing of unmanned aerial vehicle dn can be increased.

Monitor 50 displays captured image of fixed camera CF including identification mark mk of unmanned aerial vehicle dn and the captured image of PTZ camera CZ in contrast. As a result, the observer who is the user, for example, alternately compares captured image of fixed camera CF and captured image of PTZ camera CZ, thereby it is possible to accurately grasp the model of unmanned aerial vehicle dn and the surrounding circumstances where unmanned aerial vehicle dn exists.

Second Modification Example of First Exemplary Embodiment

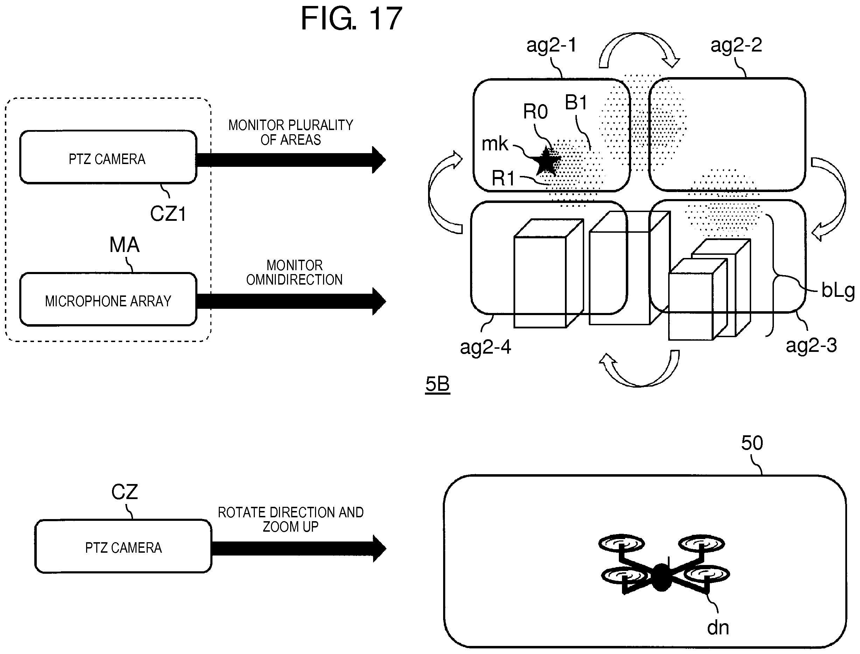

FIG. 17 is a diagram showing an example of a schematic configuration of unmanned aerial vehicle detection system 5B according to a second modification example of the first exemplary embodiment. In the first exemplary embodiment, the camera disposed on the same axis as microphone array MA is omnidirectional camera CA, and in the first modification example, the camera disposed on the same axis as microphone array MA is fixed camera CF. In the second modification example of the first exemplary embodiment (hereinafter referred to as "second modification example"), PTZ camera CZ1 is disposed so as to coincide with a center axis of microphone array MA and its own optical axis.

PTZ camera CZ1 is a camera capable of imaging by changing a direction of an optical axis, and capable of imaging by changing an angle of view in a stepwise manner in a predetermined direction (preset direction) with respect to monitoring area 8 (see FIG. 11) which is a half celestial sphere. For example, in FIG. 17, PTZ camera CZ1 changes angle of views ag2-1, ag2-2, ag2-3 and ag2-4 (collectively referred to as ag2 unless it is particularly necessary to distinguish) in four preset directions, and images four attention areas in monitoring area 8. Note that, PTZ camera CZ1 may image monitoring area 8 at each angle of view in which an optical axis is continuously changed, instead of stepwise changing the angle of view.

When unmanned aerial vehicle dn is detected at certain angle of view ag2, a camera that changes an imaging direction to a directional direction of sound picked up by microphone array MA (that is, a direction from microphone array MA to unmanned aerial vehicle dn) and images unmanned aerial vehicle dn as a subject is PTZ camera CZ as in the first exemplary embodiment.

In unmanned aerial vehicle detection system 5n of the second modification example, similar to first modification example, omnidirectional camera CA is changed to PTZ camera CZ1 in the sequence diagram shown in FIG. 9, and detection movement of unmanned aerial vehicle dn is performed in the same sequence as in the first exemplary embodiment.

As described above, when unmanned aerial vehicle dn is detected at certain angle of view ag2 by PTZ camera CZ1, unmanned aerial vehicle detection system 5B displays identification mark mk representing unmanned aerial vehicle dn on an image of the angle of view ag2 captured by PTZ camera CZ1 on monitor 50 and further displays a zoomed up image captured by PTZ camera CZ on monitor 50. When unmanned aerial vehicle dn is not detected or when unmanned aerial vehicle dn does not exist in the angle of views ag2-1 to ag2-4 monitored by PTZ camera CZ1, imaging by PTZ camera CZ1 in the imaging direction requested from monitoring device 10 is not performed.

In unmanned aerial vehicle detection system 5B of second modification example, even when unmanned aerial vehicle dn is being searched, PTZ camera CZ1 images, thereby visibility of unmanned aerial vehicle dn appearing in the captured image is improved. In other words, when imaging is performed by omnidirectional camera CA, there is a case where it is difficult to accurately determine unmanned aerial vehicle dn since around the image is distorted, but with the captured image by PTZ camera CZ1, an outline of unmanned aerial vehicle dn can be correctly grasped. As a result, a detection accuracy of unmanned aerial vehicle dn is improved.

Monitor 50 displays captured image of PTZ camera CZ1 including identification mark mk of unmanned aerial vehicle dn and the captured image of PTZ camera CZ in contrast. As a result, the observer who is the user, for example, alternately compares captured image of PTZ camera CZ1 (that is, an image of a widely captured monitoring area) and captured image of PTZ camera CZ (zoomed up image focused on detected unmanned aerial vehicle dn), thereby it is possible to accurately grasp the model of unmanned aerial vehicle dn and the surrounding circumstances where unmanned aerial vehicle dn exists.

Third Modification Example of First Exemplary Embodiment

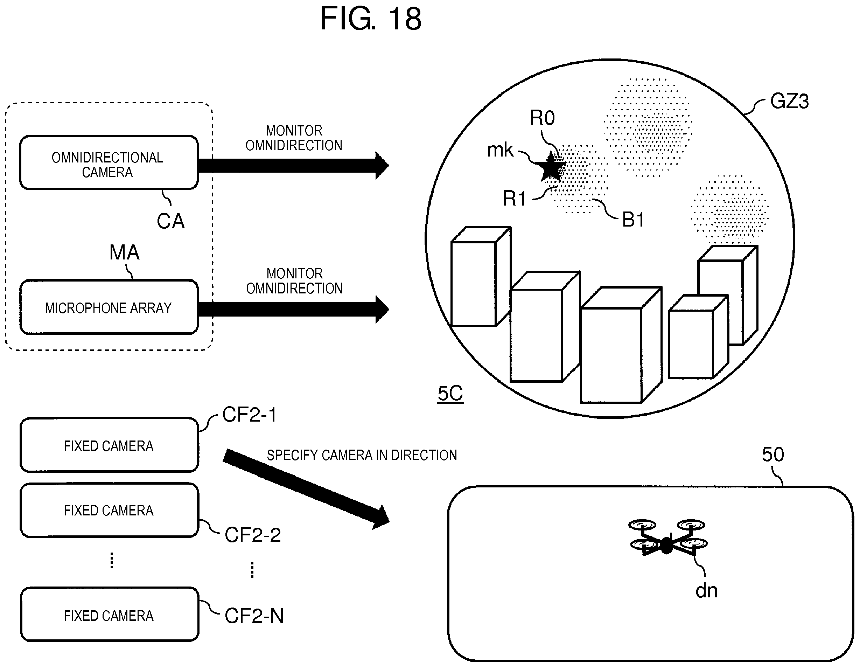

FIG. 18 is a diagram showing an example of a schematic configuration of unmanned aerial vehicle detection system 5C according to a third modification example of the first exemplary embodiment. In the first exemplary embodiment, the camera that images in response to a request from monitoring device 10 is PTZ camera CZ. In the third modification example of the first exemplary embodiment (hereinafter referred to as "third modification example"), a plurality of fixed cameras CF2-1, CF2-2, ..., CF2-N (N is any number) are provided. The plurality of fixed cameras CF2-1, CF2-2,..., CF2-N have angle of views in which optical axes are fixed in different directions respectively so as to capable of reliably grasping and imaging unmanned aerial vehicle dn for omnidirectional image GZ3 captured by omnidirectional camera CA. Note that, the angle of views captured by the plurality of fixed cameras CF2-1, CF2-2, ..., CF2-N (collectively referred to as CF2 unless it is particularly necessary to distinguish) may partially overlap.

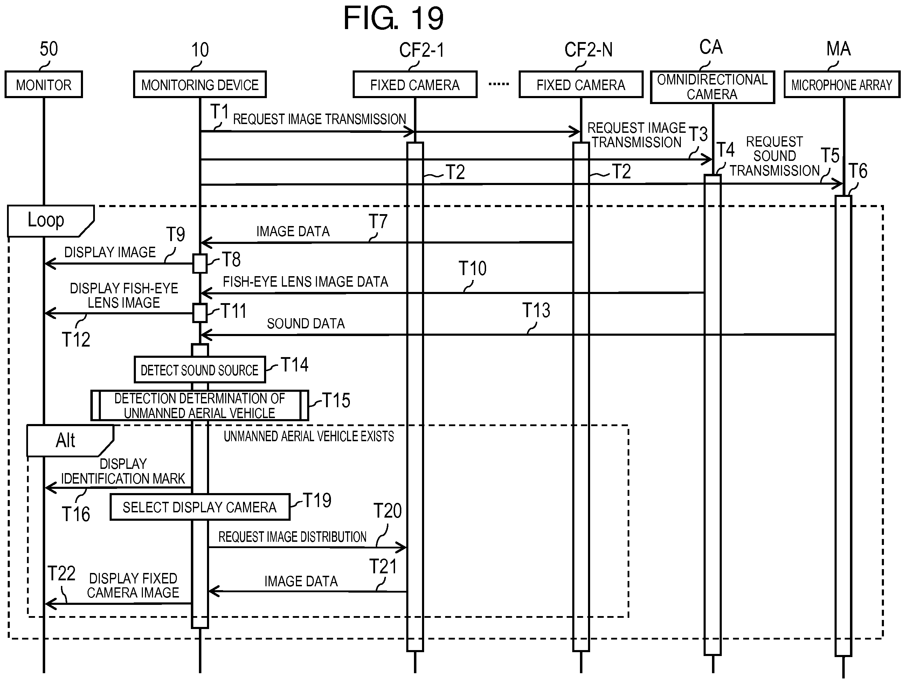

FIG. 19 is a sequence diagram showing an example of detection movement of an unmanned aerial vehicle in unmanned aerial vehicle detection system 5C of the third modification example of the first exemplary embodiment. The same procedures as those of in the sequence diagram (see FIG. 9) in the first exemplary embodiment are denoted by the same reference numerals, and description thereof is omitted. In FIG. 19, unless otherwise specified, a subject of movement of PTZ camera CZ shown in FIG. 9 may be replaced with a plurality of fixed cameras CF2-1, CF2-2, ..., CF2-N respectively. For example, although image data is transmitted only from fixed camera CF2-N to monitoring device 10 in procedure T7, in FIG. 19, image data respectively captured by respective fixed cameras CF2-1, CF2-2, ..., CF2-N are transmitted toward monitoring device 10.

Monitoring device 10 superimposes and displays identification mark mk representing unmanned aerial vehicle dn on omnidirectional image GZ1 displayed on a screen of monitor 50 in procedure T16 and then, for example, selects fixed camera CF2-1. Here, it is assumed that identification mark mk is included in an angle of view captured by, for example, fixed camera CF2-1 among the plurality of fixed cameras CF2-1, CF2-2, ..., CF2-N.

Monitoring device 10 selects fixed camera CF2-1 (T19) and performs an image distribution request to selected fixed camera CF2-1 (T20). In response to the image distribution request, fixed camera CF2-1 transmits image data of the captured image in a fixed optical axis direction to monitoring device 10 (T21). Similar to FIG. 9, each of fixed cameras CF2-1, CF2-2,..., CF2-N starts imaging processing and continues in procedure T2 in accordance with the image transmission request transmitted from monitoring device 10 in procedure T1.

Upon receiving the image data captured by fixed camera CF2-1, monitoring device 10 displays the image data on monitor 50 (T22). On the screen of monitor 50, an image showing unmanned aerial vehicle dn is displayed (see lower right of the page of FIG. 18).

In this way, unmanned aerial vehicle detection system 5C of the third modification example further includes two or more fixed cameras CF2-1, ..., CF2-N which have different optical axis directions and image the imaging area respectively. Signal processor 33 selects a fixed camera with a detection direction of unmanned aerial vehicle dn as an optical axis direction from two or more fixed cameras and requests distribution of a captured image to the selected fixed camera. Monitor 50 (displayer) displays captured image distributed from the selected fixed camera based on the request.

In unmanned aerial vehicle detection system 5C of the third modification example, only by selecting a fixed camera in which the imaging direction (optical axis direction) is fixed in advance, an image captured by the fixed camera and reliably grasped unmanned aerial vehicle dn is displayed on monitor 50. In this way, compared with a case of imaging with PTZ camera CZ, driving time for moving (rotating) PTZ camera CZ direction to a direction of unmanned aerial vehicle dn is eliminated. Therefore, the image promptly and reliably grasped unmanned aerial vehicle dn can be displayed on monitor 50. As a result, even if unmanned aerial vehicle dn moves at a high speed, it is possible to monitor unmanned aerial vehicle dn without losing sight by switching among a plurality of fixed cameras.

Fourth Modification Example of First Exemplary Embodiment

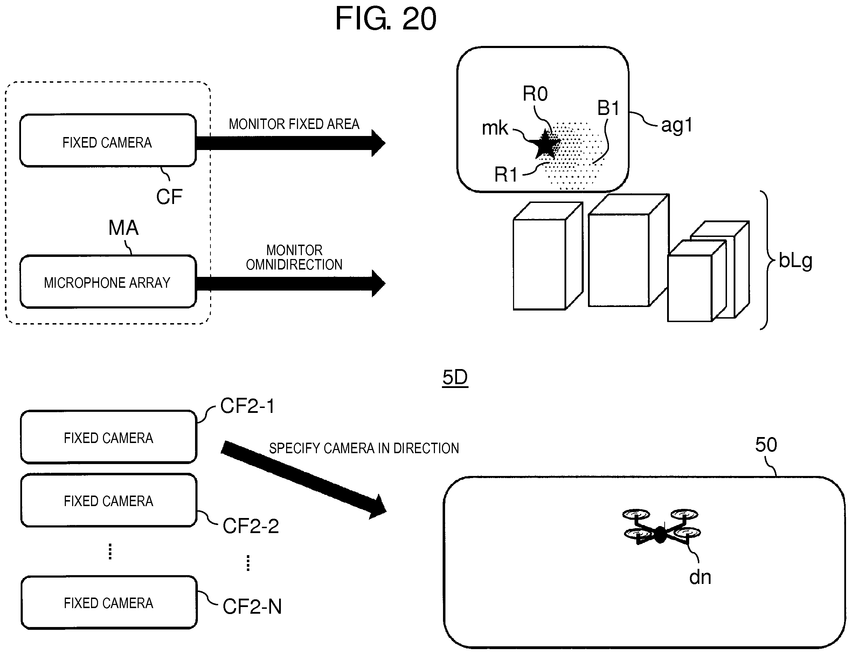

FIG. 20 is a diagram showing an example of a schematic configuration of unmanned aerial vehicle detection system 5D according to a fourth modification example of the first exemplary embodiment. In unmanned aerial vehicle detection system 5D of the fourth modification example of the first exemplary embodiment (hereinafter referred to as "fourth modification example"), similar to the third modification example, cameras to image in response to a request from monitoring device 10 are fixed cameras CF2-1, 2-2,..., CF2-N (N is any number).

In the third modification example, the camera disposed on the same axis as microphone array MA is omnidirectional camera CA, however in the fourth modification example, fixed camera CF is disposed so as to coincide with a center axis of microphone array MA and its own optical axis. That is, unmanned aerial vehicle detection system 5D of the fourth modification example has a configuration corresponding to combination of the first modification example and the third modification example.

In unmanned aerial vehicle detection system 5D of the fourth modification example, omnidirectional camera CA is changed to fixed camera CF in the sequence diagram shown in FIG. 19 of the third modification example, and detection movement of unmanned aerial vehicle dn is performed according to the same sequence as that of the third modification example.

Therefore, in unmanned aerial vehicle detection system 5D of fourth modification example, the detection processing of unmanned aerial vehicle dn is performed only a limited area, for example, unmanned aerial vehicle dn is expected to fly, so that load of the detection processing of unmanned aerial vehicle dn can be reduced and speed of the detection processing of unmanned aerial vehicle dn can be increased. Furthermore, in the limited area, it is possible to reduce the number of plural fixed cameras imaging at each angle of view in respective different imaging directions. Therefore, an unmanned aerial vehicle detection system capable of processing at high speed can be constructed with low cost.

Fifth Modification Example of First Exemplary Embodiment

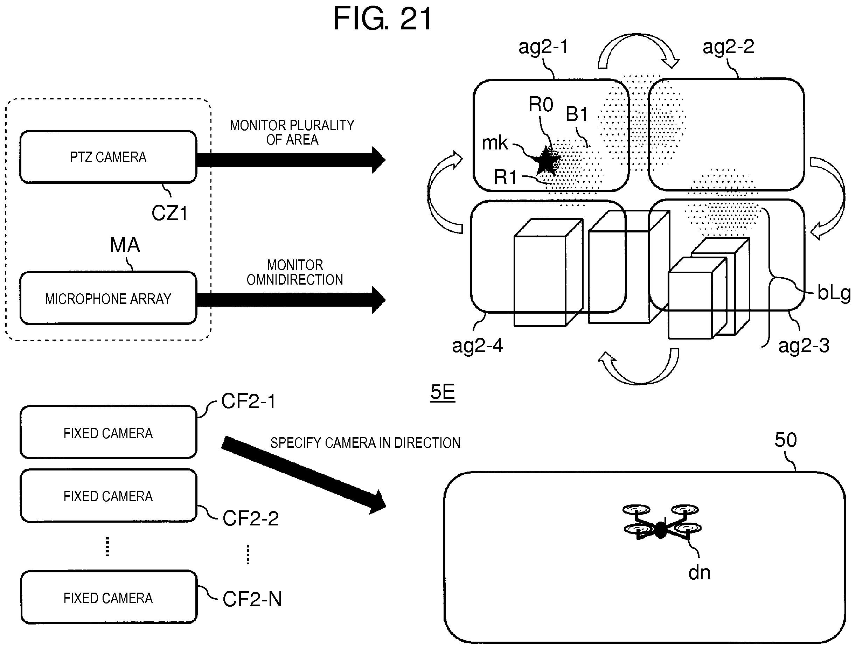

FIG. 21 is a diagram showing an example of a schematic configuration of unmanned aerial vehicle detection system 5E according to a fifth modification example of the first exemplary embodiment. In unmanned aerial vehicle detection system 5E of the fifth modification example of the first exemplary embodiment (hereinafter referred to as "fifth modification example"), similar to the third modification example and the fourth modification example, cameras to image in response to a request from monitoring device 10 are fixed cameras CF2-1, 2-2,..., CF2-n (n is any number).

In the third modification example, the camera disposed on the same axis as microphone array MA is omnidirectional camera CA, and in the fourth modification example, the camera disposed on the same axis as microphone array MA is fixed camera CF. In the fifth modification example of the first exemplary embodiment (hereinafter referred to as "fifth modification example"), PTZ camera CZ1 is disposed so as to coincide with a center axis of microphone array MA and its own optical axis. That is, unmanned aerial vehicle detection system 5E of the fifth modification example has a configuration corresponding to combination of the second modification example and the third modification example.

In unmanned aerial vehicle detection system 5E of the fifth modification example, omnidirectional camera CA is changed to PTZ camera CZ1 in the sequence diagram shown in FIG. 19 of the third modification example, and detection movement of unmanned aerial vehicle dn is performed according to the same sequence as that of the third modification example.

In unmanned aerial vehicle detection system 5E of fifth modification example, visibility of unmanned aerial vehicle dn appearing in the image is improved by imaging with PTZ camera CZ1. In other words, when imaging is performed by omnidirectional camera CA, there is a case where it is difficult to accurately determine unmanned aerial vehicle dn since around the image is distorted, but with the captured image by PTZ camera CZ1, an outline of unmanned aerial vehicle dn can be correctly grasped. As a result, a detection accuracy of unmanned aerial vehicle dn is improved. Furthermore, in the limited area, it is possible to reduce the number of plural fixed cameras imaging at each angle of view in respective different imaging directions. Thus, an unmanned aerial vehicle detection system capable of accurately detecting an unmanned aerial vehicle can be constructed with low cost.

Second Exemplary Embodiment

In a second exemplary embodiment, an example will be described in which a plurality of sound source detection units UD shown in FIG. 1 are used, for example, a distance from each sound source detection unit UD to unmanned aerial vehicle dn is measured.

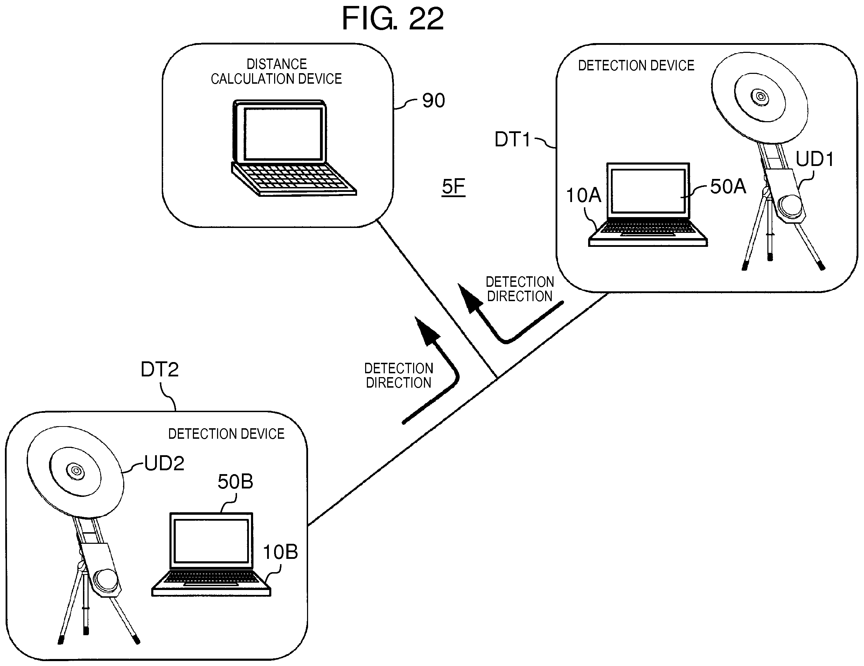

FIG. 22 is a diagram showing an example of a schematic configuration of unmanned aerial vehicle detection system 5F according to the second exemplary embodiment. In unmanned aerial vehicle detection system 5F of the second exemplary embodiment, the same reference numerals are used for the same components as those of unmanned aerial vehicle detection system 5 of the first exemplary embodiment, and the explanation thereof is omitted.

Unmanned aerial vehicle detection system 5F of the second exemplary embodiment includes two sound source detection units UD1 and UD2 having the same configuration as sound source detection unit UD shown in FIG. 1, for example. Unmanned aerial vehicle detection system 5F measures a distance from any one or both of the two sound source detection units to unmanned aerial vehicle dn using information of each direction of unmanned aerial vehicle dn detected by respective sound source detection units UD1 and UD2 (that is, directions from the sound source detection units UD1 and UD2 to unmanned aerial vehicle dn) (hereinafter, refer to "detection direction of unmanned aerial vehicle dn") and a technique of triangulation method. Specifically, unmanned aerial vehicle detection system 5F includes detection device DT1, detection device DT2, and distance calculation device 90.

Detection device DT1 includes sound source detection unit UD1, monitoring device 10A, and monitor 50A, and performs the same movement as unmanned aerial vehicle detection systems 5 to 5E of the first exemplary embodiment. Since internal configuration of monitoring device 10A is the same as the internal configuration of monitoring device 10 of the first exemplary embodiment, the description of the internal configuration of monitoring device 10A will be omitted. In this case, monitoring device 10A and monitor 50A are integrated by a general purpose computer device, however they may be devices having separate casings. Similarly, detection device DT2 includes sound source detection unit UD2, monitoring device 10B, and monitor 50B, and performs the same movement as unmanned aerial vehicle detection systems 5 to 5E of the first exemplary embodiment. Since internal configuration of monitoring device 10B is the same as the internal configuration of monitoring device 10 of the first exemplary embodiment, the description of the internal configuration of monitoring device 10B will be omitted.

Distance calculation device 90 is a general purpose computer device, and based on detection information including a detection direction of unmanned aerial vehicle dn from detection device DT1 and detection information including a detection direction of unmanned aerial vehicle dn from detection device DT2, a distance from any one or both of detection devices DT1 and DT2 to unmanned aerial vehicle dn is calculated.

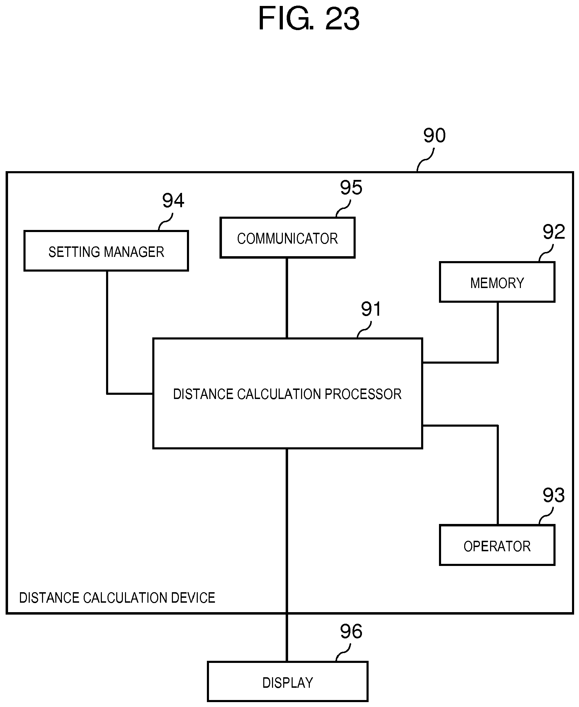

FIG. 23 is a block diagram showing in detail an example of an internal configuration of distance calculation device 90. Distance calculation device 90 includes distance calculation processor 91, memory 92, operator 93, a setting manager 94, communicator 95, and display 96.

Distance calculation processor 91 is configured using, for example, a processor that is central processing unit (CPU), micro processing unit (MPU), or digital signal processor (DSP). Using two detection directions of unmanned aerial vehicle dn included in detection information received from detection devices DT1 and DT2 and a certain distance (known) between sound source detection units UD1 and UD2, distance calculation processor 91 calculates a distance from any one or both of sound source detection units UD1 and UD2 to unmanned aerial vehicle dn by performing a technique of triangulation method.

Memory 92 stores a program, or the like for calculating the distance from any one or both of sound source detection units UD1 and UD2 to unmanned aerial vehicle dn using a technique of triangulation method. Operator 93 is an input device such as a mouse or a keyboard. Note that, operator 93 and display 96 may be integrally formed with a touch panel.

Communicator 95 receives detection information from two monitoring devices 10A and 10B and also transmits distance information calculated by the distance calculation processor 91 to monitoring devices 10A and 10B based on these detection information.

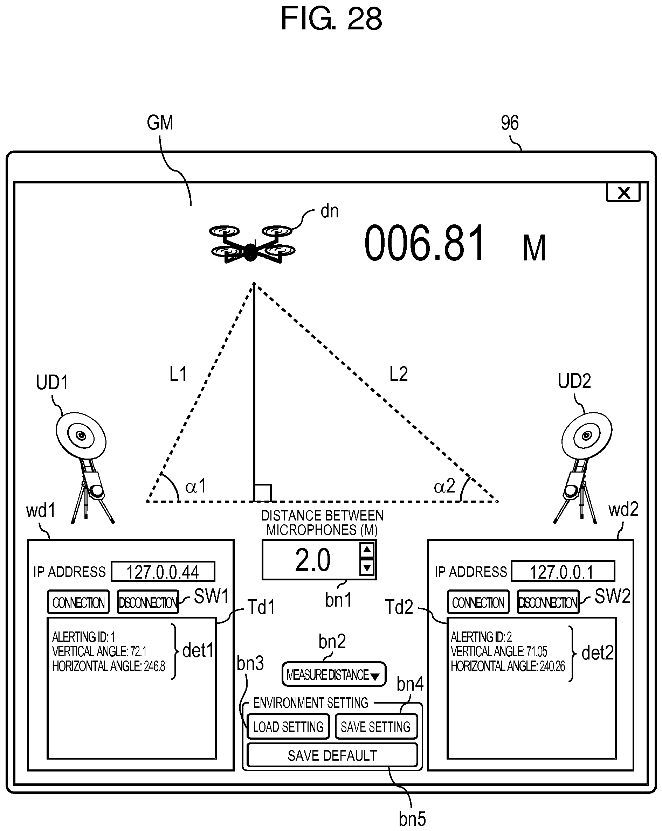

Display 96 displays UI screen GM (see FIG. 28) or the like representing a measurement result of a distance to unmanned aerial vehicle dn. Note that, display 96 may be accommodated in a casing of the distance calculation device 90 or outside a casing as an external display.

Setting manager 94 uses a technique of the triangulation method and holds information necessary for calculating the distance from any one or both of sound source detection units UD1 and UD2 to unmanned aerial vehicle dn (for example, known certain distance information between sound source detection units UD1 and UD2). Here, the distance between sound source detection devices UD1 and UD2 is stored, for example, by a user performing measurement in advance and inputting the result via operator 93. The distance between sound source detection units UD1 and UD2 may be automatically measured by detection devices DT1 and DT2. For example, when a sound source such as a person emits a sound at a place where sound source detection unit UD1 is installed, time difference from a time when the sound is picked up by sound source detection unit UD1 to a time at which sound is picked up by sound source detection unit UD2 corresponds to the distance between sound source detection units UD1 and UD2. Accordingly, monitoring device 10A and 10B include respective picked up times in detection information and transmit the detection information to distance calculation device 90, so that distance calculation device 90 can calculate and store the distance between sound source detection units UD1 and UD2.

In unmanned aerial vehicle detection system 5F according to the second exemplary embodiment, distance calculation device 90 that measures a distance from any one or both of sound source detection units UD1 and UD2 to unmanned aerial vehicle dn is realized as a separate device from detection devices DT1 and DT2, however, it may be realized by one of monitoring devices 10A and 10B.

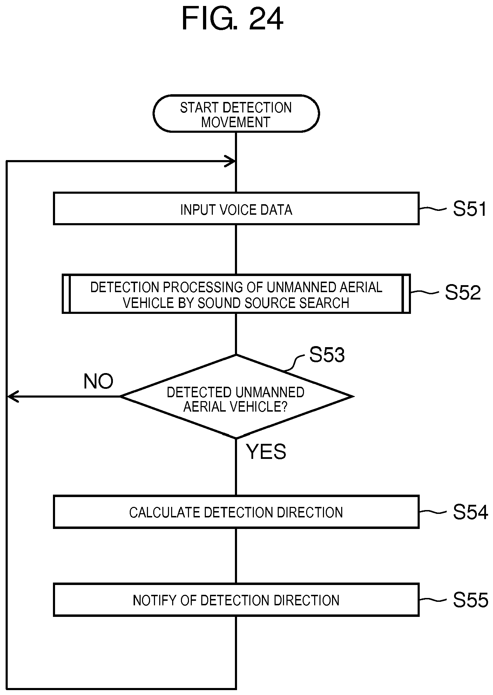

FIG. 24 is a flowchart showing an example of detection movement procedure in detection devices DT1 and DT2. Each of microphone arrays MA of sound source detection units UD1 and UD2 picks up a sound including a sound in the imaging area (see the first exemplary embodiment), and transmits sound data obtained by picking up sounds to monitoring devices 10A and 10B. As a result, monitoring devices 10A and 10B receive sound data transmitted from respective microphone arrays MA and input the sound data to respective signal processor 33 (S51). Each signal processor 33 of monitoring devices 10A and 10B performs detection processing of unmanned aerial vehicle dn by sound source search (S52). The detection processing in step S52 is the same as the processing in steps S23 to S26 in FIG. 10 in the first exemplary embodiment.

Each of signal processor 33 of monitoring devices 10A and 10B determines whether or not unmanned aerial vehicle dn is detected as a result of the detection processing (S53). When unmanned aerial vehicle dn is not detected (NO in S53), the processing of each signal processor 33 returns to step S51.

On the other hand, when unmanned aerial vehicle dn is detected (YES in S53), each signal processor 33 calculates a directional direction when sound directivity is formed in a direction from microphone array MA to detected unmanned aerial vehicle dn as the detection direction to unmanned aerial vehicle dn (S54). Each communicator 31 of monitoring devices 10A and 10B transmits the detection information including the detection direction calculated in step S54 to distance calculation device 90 (S55). Thereafter, the processing of detection devices DT1 and DT2 returns to step S51.

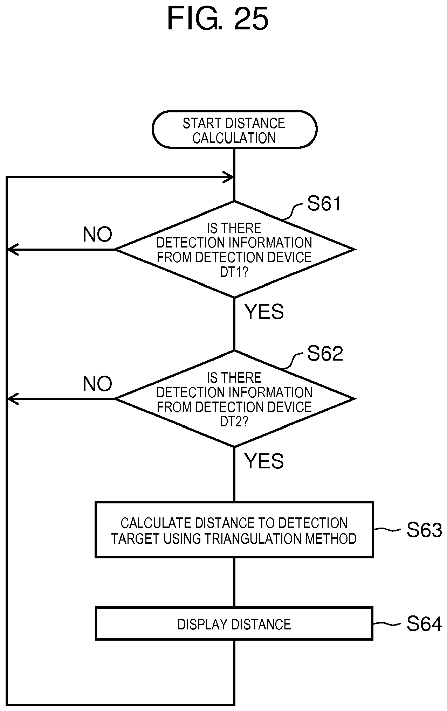

FIG. 25 is a flowchart showing an example of a distance calculation procedure in distance calculation device 90. Communicator 95 of distance calculation device 90 determines whether or not detection information from detection device DT1 is received (S61). When the detection information is not received (NO in S61), the processing of communicator 95 returns to step S61.

On the other hand, when detection information is received (YES in S61), communicator 95 determines whether or not the detection information from detection device DT2 is received (S62). When the detection information is not received (NO in S62), the processing of communicator 95 returns to step S61. In FIG. 25, it is determined whether or not detection information is received in the order of detection devices DT1 and DT2, but it may be performed in reverse order. In other words, it may be executed in the order of step S62 → step S61.

Based on respective detection information received in steps S61 and S62, distance calculation processor 91 calculates a distance between the detection target (unmanned aerial vehicle dn) from any one or both of sound source detection units UD1 and UD2 using a technique of triangulation method (S63). Details of a calculation of a distance from any one or both of sound source detection units UD1 and UD2 to unmanned aerial vehicle dn will be described later. Distance calculation processor 91 displays UI screen GM (see FIG. 28) including a calculation result of a distance to unmanned aerial vehicle dn on display 96 (S64). Thereafter, the processing of distance calculation device 90 returns to step S61.

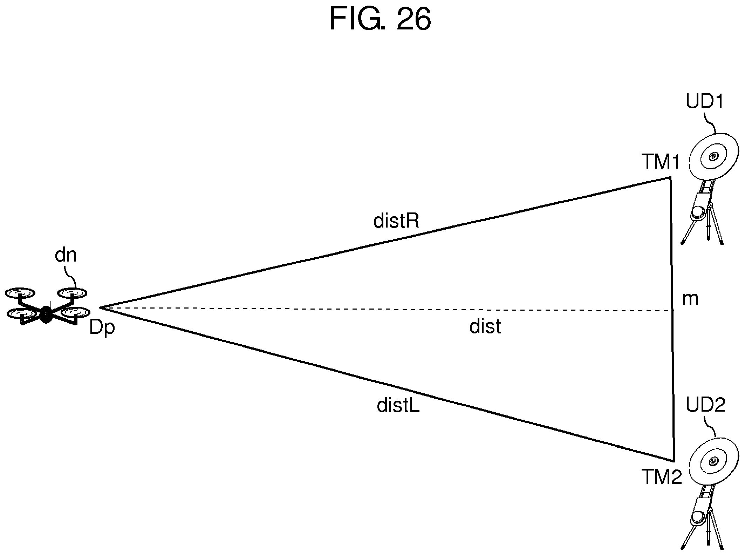

FIG. 26 is an explanatory diagram of an example of a method of obtaining a distance from any one or both of sound source detection units UD1 and UD2 to unmanned aerial vehicle dn using a technique of a triangulation method. Here, positions of sound source detection units UD1 and UD2 are defined as TM1 and TM2, respectively. Position of unmanned aerial vehicle dn is defined as Dp. A distance from sound source detection unit UD1 to unmanned aerial vehicle dn is defined as distR. Similarly, a distance from sound source detection unit UD2 to unmanned aerial vehicle dn is defined as distL. A length of perpendicular from a position Dp of unmanned aerial vehicle dn to a line segment between a position TM1 of sound source detection unit UD1 and a position TM2 of sound source detection unit UD2 is defined as dist.

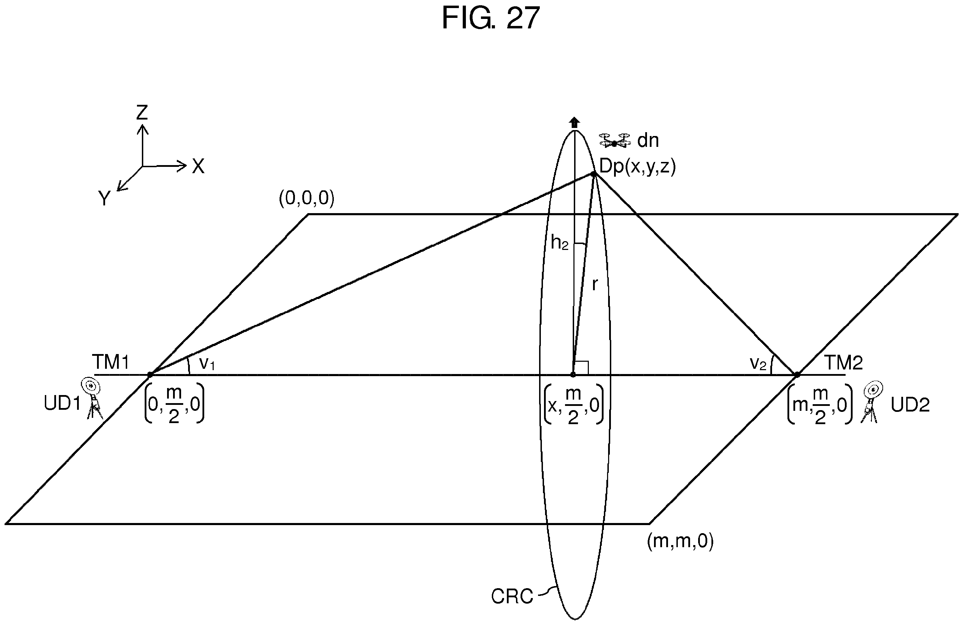

FIG. 27 is an explanatory diagram of a calculation example of a position Dp of unmanned aerial vehicle dn. In a xyz coordinate system shown in FIG. 27, a square plane with one side of length m along a xy plane is assumed. As described later, m is a length (known) of a line segment between sound source detection units UD1 and UD2. Position Dp of unmanned aerial vehicle dn flying in the air is represented by coordinates (x, y, z). In a case where sound source detection unit UD1 is disposed at a midpoint position of one side (length m) extending in a y-axis direction from an origin (0, 0, 0) which is one vertex of the above mentioned square plane, a position TM1 of sound source detection unit UD1 is represented by coordinates (0, m/2, 0). Similarly, in a case where sound source detection unit UD2 is disposed at a midpoint position of one side (length m) extending in a y-axis direction from an origin (m, 0, 0) which is one vertex of the above mentioned square plane, a position TM2 of sound source detection unit UD2 is represented by coordinates (m, m/2, 0). A length (a certain distance) of a line segment between sound source detection units UD1 and UD2 is m.

A detection direction of detection information of unmanned aerial vehicle dn detected by sound source detection unit UD1 is indicated by vertical angle v1 and horizontal angle h1. Similarly, a detection direction of detection information of unmanned aerial vehicle dn detected by sound source detection unit UD2 is indicated by vertical angle v2 and horizontal angle h2. In the xyz coordinate system shown in FIG. 27, the horizontal angle h1=h2.

When radius r is length dist of the perpendicular from unmanned aerial vehicle dn to the line segment between sound source detection units UD1 and UD2 and a foot of the perpendicular from unmanned aerial vehicle dn to the line segment is represented by coordinates (x, m/2, 0), the position Dp of unmanned aerial vehicle dn is at a horizontal angle h2 in circle CRC on the horizontal plane centered on the foot of the perpendicular.

From geometrical consideration using a trigonometric function, coordinates (x, y, z) of the position Dp of unmanned aerial vehicle dn are represented by Equations (1), (2), and (3) respectively.

$$x = m \times \frac{\tan v_2}{\tan v_1 + \tan v_2} \quad \text{...} \, (1)$$

$$y = \frac{m}{2} - (x \times \tan v_1 \times \sinh_2) \quad \text{...} \, (2)$$

$$z = x \times \tan v_1 \times \cosh_2 \quad \text{...} \, (3)$$

When the position Dp of unmanned aerial vehicle dn is determined, that is, when coordinates of three points of the triangle are determined, each distance distR, distL from sound source detection units UD1 and UD2 to unmanned aerial vehicle dn and length dist of a perpendicular from unmanned aerial vehicle dn to a line segment between sound source detection units UD1 and UD2 are simply calculated. The calculation is performed by distance calculation processor 91.

Therefore, in a case of obtaining a distance from any one or both of sound source detection units UD1 and UD2 to unmanned aerial vehicle dn using a technique of a triangulation method, it may be sufficient to know certain distance m between detection directions (vertical angle v1, horizontal angle h1), (vertical angle v2, horizontal angle h2) when each sound source detection unit UD1 and UD2 detects unmanned aerial vehicle dn and sound source detection units UD1 and UD2.

FIG. 28 is a diagram showing an example of UI screen GM including a distance from any one or both of sound source detection units UD1 and UD2 to unmanned aerial vehicle dn. UI screen GM is displayed on display 96 of distance calculation device 90. UI screen GM includes a schematic diagram representing a positional relationship among unmanned aerial vehicle dn, sound source detection unit UD1 (first unit), and sound source detection unit UD2 (second unit), a distance from any one or both of sound source detection units UD1 and UD2 to unmanned aerial vehicle dn, a distance between sound source detection units UD1 and UD2 (certain distance), direction information obtained by sound source detection unit UD1 (first direction information), and direction information obtained by sound source detection unit UD2 (second direction information). As a result, a user can check a numerical value that is the basis for calculating a distance to unmanned aerial vehicle dn.

Specifically, on UI screen GM, the following information is displayed. A vertical distance from unmanned aerial vehicle dn to a line segment between two sound source detection units UD1 and UD2 is displayed. Here, the vertical distance is 006.81 meters (M). In UI screen GM, distance L1 from sound source detection unit UD1 to unmanned aerial vehicle dn or elevation angle $\alpha$1, and distance L2 from sound source detection unit UD1 to unmanned aerial vehicle dn or elevation angle $\alpha$2, are displayed.

Further, button bn1 for setting a distance between two sound source detection units UD1 and UD2 is displayed. Here, a distance between two sound source detection units UD1 and UD2 is set to 2 meters (M) by pressing button bn1.

On UI screen GM, screen wd1 including detection information of sound source detection unit UD1 and screen wd2 including detection information of sound source detection unit UD2 are displayed.

On screen wd1, an IP address of sound source detection unit UD1, connection/disconnection switch SW1, and data table Td1 are displayed. In data table Td1, an alerting ID, a vertical angle, and a horizontal angle are registered. Here, "vertical angle: 72.1" and "horizontal angle: 246.8" indicate detection direction det1 of sound source detection unit UD1.

Similarly, on screen wd2, an IP address of sound source detection unit UD2, connection/disconnection switch SW2, and data table Td2 are displayed. In data table Td2, an alerting ID, a vertical angle, and a horizontal angle are registered. Here, "vertical angle: 71.05" and "horizontal angle: 240.26" indicate detection direction det2 of sound source detection unit UD2.

In UI screen GM, pull down menu bn2 for setting a distance between two sound source detection units UD1 and UD2, load button bn3 for environment setting, set button bn4, and default save button bn5 are placed.

As described above, in unmanned aerial vehicle detection system 5F, sound source detection unit UD1 (first detection unit) in which the omnidirectional camera and the microphone array are disposed coaxially and sound source detection unit UD2 (second detection unit) in which the omnidirectional camera and the microphone array are disposed coaxially are disposed at a certain distance from each other. Distance calculation device 90 derives a distance to unmanned aerial vehicle dn and displays the distance on display 96 (second displayer) based on the certain distance, first direction information including a detection direction det1 (vertical angle v1, horizontal angle h1) of unmanned aerial vehicle dn derived by the omnidirectional camera of sound source detection unit UD1, and second direction information including a detection direction det2 (vertical angle v2, horizontal angle h2) of unmanned aerial vehicle dn derived by the omnidirectional camera of sound source detection unit UD2.

In unmanned aerial vehicle detection system 5F according to the second exemplary embodiment, it is possible not only to display flying unmanned aerial vehicle dn on display 96, but also to obtain an actual distance up to unmanned aerial vehicle dn. By this, it is possible to grasp about an area where unmanned aerial vehicle dn is located, and about how much time it takes for unmanned aerial vehicle dn to arrive in a case where unmanned aerial vehicle dn moves toward unmanned aerial vehicle detection system 5F. Therefore, it can help prepare for unmanned aerial vehicle dn.

Third Exemplary Embodiment

In a third exemplary embodiment, an example will be described in which a plurality of sound source detection units UD shown in FIG. 1 are used to estimate a position in a monitoring area where unmanned aerial vehicle dn exists. As a monitoring area of the present exemplary embodiment, a water purification plant will be described as an example, but it is not limited to a water purification plant. A water purification plant is a facility that intakes water or groundwater flowing in rivers or the like, disinfects by filtration, sterilization, or the like, and supplies water suitable for beverages to a water supply system. Here, as an example of a business use using unmanned aerial vehicle dn, assuming an emergency situation in which unmanned aerial vehicle dn flies over the water purification plant and sprays poisons or the like, an unmanned aerial vehicle detection system of the present exemplary embodiment estimates a block (section) of the water purification plant where unmanned aerial vehicle dn exists.

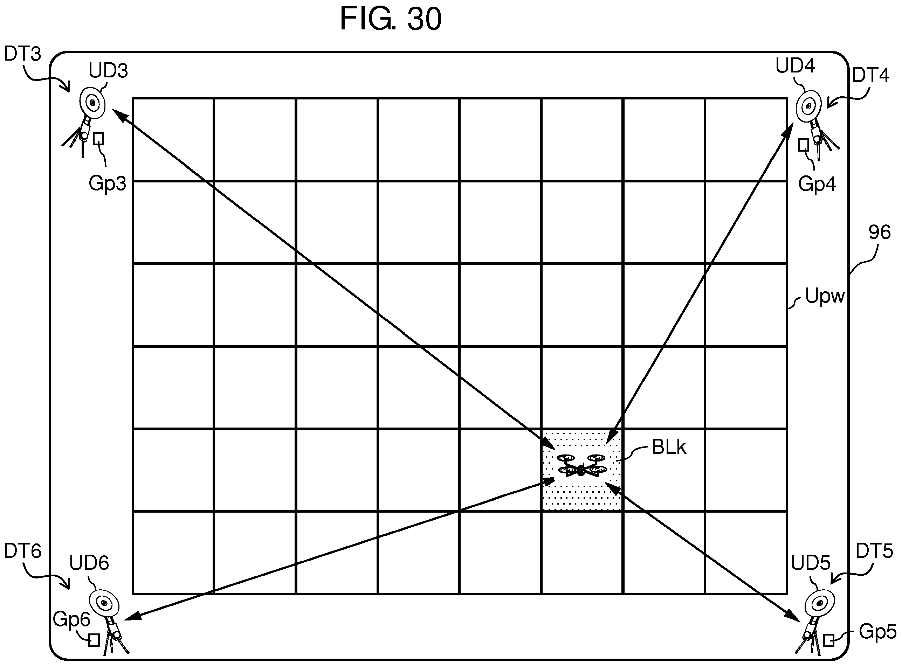

Four sound source detection units UD3, UD4, UD5, and UD6 are installed at four corners of water purification plant Upw (see FIG. 30). Since internal configuration of these sound source detection units UD3, UD4, UD5, and UD6 is the same as the internal configuration of sound source detection unit UD shown in FIG. 1, the explanation will be omitted. Normally, the water purification plant has many storage tanks suitable for a water treatment processing. Each storage tank is divided into blocks (sections). In the present exemplary embodiment, a storage tank divided into a plurality of blocks (sections) in a grid shape is assumed, and it is estimated in which block unmanned aerial vehicle dn flying over the water purification plant exists.

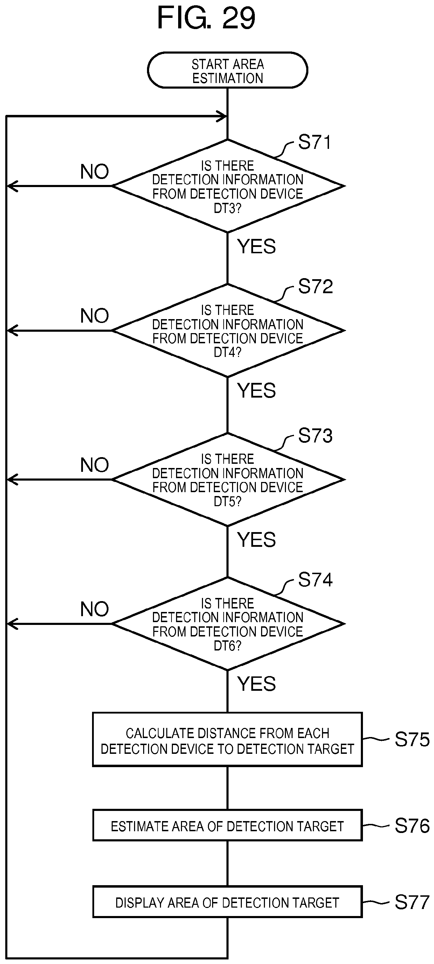

FIG. 29 is a flowchart showing an example of a section estimation procedure within a monitoring area in which unmanned aerial vehicle dn exists according to the third exemplary embodiment. In the unmanned aerial vehicle detection system of the present exemplary embodiment, similarly to FIG. 22, distance measurement device 90 is connected to detection devices DT3, DT4, DT5, and DT6 provided corresponding to sound source detection units UD3, UD4, UD5, and UD6 so as to enable communication of information or data. In FIG. 30, illustration of each monitoring device and monitor configuring detection devices DT3, DT4, DT5, and DT6 is omitted. Communicator 95 of distance calculation device 90 determines whether or not detection information from detection device DT3 is received (S71). When the detection information is not received (NO in S71), the processing of communicator 95 returns to step S71.

On the other hand, when detection information is received (YES in S71), similarly, communicator 95 determines whether or not the detection information from detection device DT4 is received (S72). When the detection information is not received (NO in S72), the processing of communicator 95 returns to step S71.

On the other hand, when detection information is received (YES in S72), similarly, communicator 95 determines whether or not the detection information from detection device DT5 is received (S73). When the detection information is not received (NO in S73), the processing of communicator 95 returns to step S71.

On the other hand, when detection information is received (YES in S73), similarly, communicator 95 determines whether or not the detection information from detection device DT6 is received (S74). When the detection information is not received (NO in S74), the processing of communicator 95 returns to step S71. In FIG. 29, the presence or absence of reception of the detection information is determined in the order of detection devices DT3, DT4, DT5, and DT6, however, reception of the detection information from the four detection devices may be confirmed, and the processing order of four are not limited in steps S71 to S74.

On the other hand, when the detection information is received (YES in S74), distance calculation processor 91 of distance calculation device 90 calculates a distance from each sound source detection unit UD3, UD4, UD5, and UD6 to unmanned aerial vehicle dn (S75). Based on the distance from each of sound source detection units UD3, UD4, UD5, and UD6 to unmanned aerial vehicle dn, distance calculation processor 91 estimates block Blk in water purification plant Upw (see FIG. 30) in which unmanned aerial vehicle dn exists above the sky (S76). Regarding the step S76, it is assumed that map information (position information) of the storage tank divided into the plurality of blocks (sections) in a grid shape is known and the map information is held by distance calculation device 90. Distance calculation processor 91 of distance calculation device 90 estimates a block Blk in the water purification plant Upw (see FIG. 30) in which unmanned aerial vehicle dn exists above the sky using a position of unmanned aerial vehicle dn specified by each distance from each sound source detection unit UD3, UD4, UD5, and UD6 to unmanned aerial vehicle dn and map information (position information) of the above mentioned storage tank (S76).

Distance calculation processor 91 displays estimated block Blk (in other words, block Blk in water purification plant Upw in which unmanned aerial vehicle dn exists in the sky) on display 96 (S77). FIG. 30 is a diagram showing an example of a screen display of display 96 on which water purification plant Upw including block Blk in which unmanned aerial vehicle dn exists above the sky, is displayed. Block Blk in which unmanned aerial vehicle dn exists above the sky is displayed so as to be distinguishable from other blocks.

In this way, in the unmanned aerial vehicle detection system of the third exemplary embodiment, four sound source detection units UD3, UD4, UD5, and UD6 are disposed so as to surround water purification plant Upw (monitoring area). Distance calculation device 90 estimates block blk (section within the monitoring area) of water purification plant Upw where unmanned aerial vehicle dn exists, based on distances to unmanned aerial vehicle dn respectively derived by the plurality of units.

As described above, in the unmanned aerial vehicle detection system according to the third exemplary embodiment, it is possible to easily specify a block (section within the monitoring area) where unmanned aerial vehicle dn flew in a relatively wide facility such as a water purification plant. Also, since blocks in the facility correspond to processing process in the facility, appropriate actions can be taken for each block estimated to have unmanned aerial vehicle dn in the sky. For example, in a case where there is nothing in the estimated block, it is possible to take action to take down unmanned aerial vehicle dn. On the other hand, in a case where a large amount of water in which disinfection such as filtration or sterilization is being carried out is stored in the estimated block, it is also possible to take action such as capturing so as to wrap unmanned aerial vehicle dn.

In this case, only when the detection information is received from all of four sound source detection units UD3, UD4, UD5, and UD6, distance calculation processor 91 of distance calculation device 90 calculates distances from each sound source detection unit UD3, UD4, UD5, and UD6 to unmanned aerial vehicle dn. As described in detail in the second exemplary embodiment, when there is at least two sound source detection units, distance calculation device 90 can acquire and specify a position of unmanned aerial vehicle dn, so that it is also possible to estimate the block in the facility where unmanned aerial vehicle dn exists. However, when there are three or more sound source detection units and are disposed along the shape of the monitoring area, estimation accuracy of the section (block) in which unmanned aerial vehicle dn exists in the monitoring area can be enhanced.

In the above description, the water purification plant as a monitoring area is assumed to be a rectangle, and four sound source detection units are disposed at four corners thereof, however, when the monitoring area is a circle such as a sports facility, a plurality of sound source detection units may be disposed at any places surrounding the circle so as to estimate a section where unmanned aerial vehicle dn exists.

As shown in FIG. 30, each of four sound source detection units UD3, UD4, UD5, and UD6 at the four corners may incorporate a global positioning system (GPS) measurement devices Gp3, Gp4, Gp5, and Gp6 for measuring position information composed of latitude and longitude indicating respective installation locations. Specifically, GPS measurement devices Gp3, Gp4, Gp5, and Gp6 are built in at least one of the omnidirectional camera, the microphone array and the PTZ camera configuring sound source detecting units UD3, UD4, UD5, and UD6. GPS measurement devices Gp3, Gp4, Gp5, and Gp6 are not limited to being incorporated in sound source detection units UD3, UD4, UD5, and UD6, and may be externally connected. For example, GPS measurement devices Gp3, Gp4, Gp5, and Gp6 may be connected to corresponding sound source detection units UD3, UD4, UD5, and UD6 by wires (for example, transmission cables) or wirelessly.

When corresponding sound source detection units UD3, UD4, UD5, and UD6 are installed, GPS measurement devices Gp3, Gp4, Gp5, and Gp6 measure respective position information and transmit the respective position information to respective monitoring devices configuring detection devices DT3, DT4, DT5, and DT6. Each monitoring device transmits the respective position information measured by GPS measurement devices Gp3, Gp4, Gp5, and Gp6 to distance calculation device 90 (see FIG. 22). Using the information from detection devices DT3, DT4, DT5, and DT6 (for example, position information of sound source detection units UD3, UD4, UD5, and UD6), distance calculation device 90 calculates respective distances among sound source detection units UD3, UD4, UD5, and UD6. Distance calculation device 90 is able to specify an absolute position (latitude and longitude) of unmanned aerial vehicle dn using information or data from detection devices DT3, DT4, DT5, and DT6 (for example, a detection direction of unmanned aerial vehicle dn and position information of sound source detection units UD3, UD4, UD5, and UD6) and respective distances among sound source detection units UD3, UD4, UD5, and UD6. In other words, by incorporating GPS measurement devices Gp3, GP4, Gp5, and GP6 in each of sound source detection units UD3, UD4, UD5, and UD6, measurement of installation position can be automated.

By this, it possible to save labor of manually measuring the respective distances of sound source detection units UD3, UD4, UD5, and UD6 when the installation of sound source detection units UD3, UD4, UD5, and UD6 is completed. In addition, even when an installation location of at least one sound source detection unit is changed, position information (that is, absolute position) of the installation location after the change of the sound source detection unit can be acquired, so that it is possible to calculate the distance of respective sound source detection units UD3, UD4, UD5, and UD6, and it is also possible to specify an absolute position (latitude and longitude) of unmanned aerial vehicle dn.

Fourth Exemplary Embodiment

In a fourth exemplary embodiment, an example of determining a correctness of a detection of unmanned aerial vehicle dn detected by two sound source detection units UD1 and UD2 will be described.

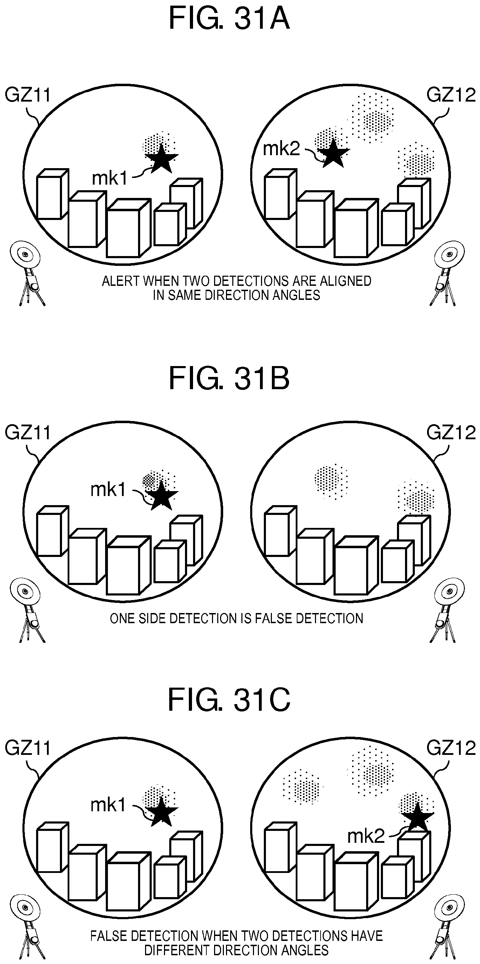

FIGS. 31A to 31C are explanatory diagrams of determining a correctness of a detection of unmanned aerial vehicle dn by two sound source detection units UD1 and UD2 according to the fourth exemplary embodiment.

FIG. 31A shows a case where detections by two sound source detection units UD1 and UD2 have same azimuths and aligned. Here, the same azimuths and aligned represents that, for example, with respect to monitoring area 8 which is a half celestial sphere in FIG. 11, respective viewing angles indicating orientation from two sound source detection units UD1 and UD2 to unmanned aerial vehicle dn are the same or substantially the same. In this case, monitoring devices 10A and 10B have alerting units (not shown), and alert from the alerting units. The alerting unit may be, for example, a speaker, a display, or a lamp such as a light emission diode (LED). In a case of a speaker, the alerting unit sound outputs a predetermined sound. In a case of a display, the alerting unit displays a predetermined message. In a case of a lamp such as an LED, the alerting unit flashes with a predetermined blinking pattern. As an example in which the sound source detection units are aligned in the same azimuths, in FIG. 31A, for example, when center axes (optical axes) of lens centers (optical axes) of omnidirectional cameras CA of sound source detection units UD1 and UD2 are disposed to be separated by a certain distance so as to be parallel, identification marks mk1 and mk2 representing unmanned aerial vehicles dn to be displayed in respective omnidirectional images GZ11 and GZ12 are placed inside.

FIG. 31B shows a case where detection of unmanned aerial vehicle dn by only one sound source detection unit (for example, sound source detection unit UD2) is false detection or cannot be detected.

FIG. 31C shows a case where detections by two sound source detection units UD1 and UD2 have different azimuths and false detection. As an example in which the sound source detection units are in different azimuths, in FIG. 31C, for example, when center axes (optical axes) of lens centers (optical axes) of omnidirectional cameras CA of sound source detection units UD1 and UD2 are disposed to be separated by a certain distance so as to be parallel, identification marks mk representing unmanned aerial vehicles dn to be displayed in respective omnidirectional images GZ11 and GZ12 are placed in same one side.

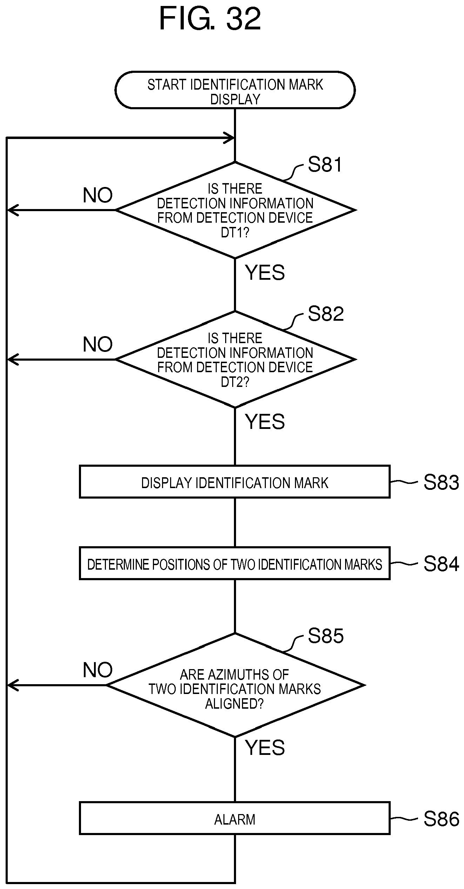

FIG. 32 is a flowchart showing an example of a determination procedure of detection of unmanned aerial vehicle dn by two sound source detection units. Communicator 95 of distance calculation device 90 determines whether or not detection information from detection device DT1 is received (S81). When the detection information is not received (NO in S81), the processing of communicator 95 returns to step S81.

On the other hand, when detection information is received (YES in S81), communicator 95 determines whether or not the detection information from detection device DT2 is received (S82). When the detection information is not received (NO in S82), the processing of communicator 95 returns to step S81. Note that, here, it is determined whether or not detection information is received in the order of detection devices DT1 and DT2, but it may be performed in reverse order. In other words, it may be executed in the order of step S82 → step S81.

Based on the received detection information, distance calculation processor 91 superimposes and displays identification marks mk representing unmanned aerial vehicles dn on each omnidirectional image GZ11 and GZ12 (S83). Distance calculation processor 91 determines positions of two identification marks mk1 and mk2 superimposed and displayed on two omnidirectional images GZ11 and GZ12 (S84).

Distance calculation processor 91 determines whether or not azimuths of two identification marks mk1 and mk2 are aligned (S85). When the azimuths of two identification marks mk1 and mk2 are aligned, distance calculation processor 91 determines that unmanned aerial vehicle dn is correctly detected and displays an alarm on display 96 to alert (S86). Distance calculation device 90 may alert an alarm with a sound from a speaker (not shown). Thereafter, distance calculation processor 91 returns to step S81.

On the other hand, when the azimuths of two identification marks mk1, mk2 are not aligned (NO in S85), distance calculation processor 91 determines that unmanned aerial vehicle dn is false detected, notifies a user of nothing, and performs a processing of step S81.

Note that, in this case, an alerting is issued when the detection is correct and nothing is issued when the detection is incorrect, however a correct alerting may be issued when the detection is correct and an incorrect alerting may be issued when the detection is incorrect.

As described above, the unmanned aerial vehicle detection system according to the fourth exemplary embodiment determines a correctness of a detection of unmanned aerial vehicle dn and notifies the determination result depending on whether or not azimuths based on a directional direction at the time when sound source detection unit UD1 (first detection unit) and sound source detection unit UD2 (second detection unit) detect unmanned aerial vehicle dn are aligned.

In the unmanned aerial vehicle detection system according to the fourth exemplary embodiment, it is possible to easily determine whether unmanned aerial vehicle dn detected by two sound source detection units UD1 and UD2 is correct or not (correctness). Therefore, even if there are many sound sources in the sky, it is possible to easily determine the presence or absence of unmanned aerial vehicle dn.

Although various exemplary embodiments are described with reference to the drawings, needless to say, the present invention is not limited to the examples. Those skilled in the art will appreciate that various modification examples or amendment examples can be conceived within the scope described in the claims, and it is obvious that those belonging to the technical scope of the present invention are understood as well.

INDUSTRIAL APPLICABILITY

The present invention is useful as an unmanned aerial vehicle detection system and an unmanned aerial vehicle detection method that can easily determine an existence and position of an unmanned aerial vehicle from a captured image when detecting an unmanned aerial vehicle.

REFERENCE MARKS IN THE DRAWINGS

| | |
|---|---|
| 5, 5A to 5F | UNMANNED AERIAL VEHICLE DETECTION SYSTEM |
| 10, 10A, 10B | MONITORING DEVICE |
| 15 | CASING |
| 25 | COMPRESSION PROCESSOR |
| 26 | TRANSMITTER |
| 31 | COMMUNICATOR |
| 32 | OPERATOR |
| 33 | SIGNAL PROCESSOR |
| 34 | SOUND SOURCE DIRECTION DETECTOR |
| 35 | OUTPUT CONTROLLER |
| 37 | SPEAKER DEVICE |
| 38 | MEMORY |
| 39 | SETTING MANAGER |
| 41, 51 | CPU |
| 42, 52 | COMMUNICATOR |
| 44, 54 | POWER SUPPLY MANAGER |
| 45, 55 | IMAGE SENSOR |
| 46, 56 | MEMORY |
| 46x, 56x | MEMORY CARD |
| 46y, 56y | RAM |
| 46z, 56z | ROM |
| 47, 57 | NETWORK CONNECTOR |
| 50 | MONITOR |
| 58 | IMAGING DIRECTION CONTROLLER |
| 59 | LENS DRIVING MOTOR |
| 63 | DIRECTIVITY PROCESSOR |
| 64 | FREQUENCY ANALYZER |
| 65 | TARGET DETECTOR |
| 66 | DETECTION RESULT DETERMINER |
| 67 | SCAN CONTROLLER |
| 68 | DETECTION DIRECTION CONTROLLER |
| 90 | DISTANCE CALCULATION DEVICE |
| 91 | DISTANCE CALCULATION PROCESSOR |
| 92 | MEMORY |
| 93 | OPERATOR |
| 94 | SETTING MANAGER |
| 95 | COMMUNICATOR |
| 96 | DISPLAY |
| CA | OMNIDIRECTIONAL CAMERA |
| CF, CF2-1 to CF2-N | FIXED CAMERA |

CZ, CZ1 PTZ CAMERA
M1 to Mn MICROPHONE UNIT
MA MICROPHONE ARRAY
NW NETWORK
UD, UD1 to UD6 SOUND SOURCE DETECTION UNIT

**Claims**

1. An unmanned aerial vehicle detection system comprising:

   a camera that images an imaging area;
   a microphone array that picks up a sound in the imaging area;
   a display that displays a captured image of the imaging area captured by the camera; and
   a signal processor that detects an unmanned aerial vehicle appearing in the imaging area using the sound picked up by the microphone array,
   wherein the signal processor superimposes first identification information obtained by converting the unmanned aerial vehicle into visual information in the captured image of the imaging area on the captured image of the imaging area and displays on the displayer.

2. The unmanned aerial vehicle detection system of Claim 1, further comprising
   a PTZ camera that is capable of adjusting an optical axis direction and images the imaging area,
   wherein the signal processor outputs an instruction for adjusting the optical axis direction to a detection direction of the unmanned aerial vehicle, to the PTZ camera, and
   wherein the displayer displays a captured image captured by the PTZ camera of which the optical axis direction is adjusted based on the instruction.

3. The unmanned aerial vehicle detection system of Claim 1, further comprising:

   two or more fixed cameras that have different optical axis directions respectively and image the imaging area,
   wherein the signal processor selects one of the fixed cameras in which a detection direction of the unmanned aerial vehicle is the optical axis direction from among the two or more fixed cameras and sends a request to the selected fixed camera for distributing the captured image, and
   wherein the displayer displays the captured image distributed from the selected fixed camera based on the request.

4. The unmanned aerial vehicle detection system of Claim 1,
   wherein the camera is an omnidirectional camera,
   wherein a plurality of omnidirectional cameras and a plurality of microphone arrays are provided,
   wherein a first detection unit in which a first omnidirectional camera and a first microphone array are disposed coaxially and a second detection unit in which a second omnidirectional camera and a second microphone array are disposed coaxially, are disposed a certain distance away, and
   wherein the signal processor derives a distance from the first detection unit or the second detection unit to the unmanned aerial vehicle based on the certain distance, first direction information from the first detection unit to the unmanned aerial vehicle, the information being derived by the first omnidirectional camera, and second direction information from the second detection unit to the unmanned aerial vehicle, the information being derived by the second omnidirectional camera, and displays the distance on the displayer.

5. The unmanned aerial vehicle detection system of Claim 4,
   wherein three or more detection units including the first detection unit and the second detection unit are disposed surrounding the imaging area, and
   wherein the signal processor estimates a section within the imaging area in which the unmanned aerial vehicle exists based on a distance from each detection unit to the unmanned aerial vehicle, the distance being derived by the three or more detection units respectively.

6. The unmanned aerial vehicle detection system of Claim 4,
   wherein the signal processor determines a correctness of a detection of the unmanned aerial vehicle depending on whether or not azimuths based on directions at a time when the first detection unit and the second detection unit detect the unmanned aerial vehicle are aligned, and causes a notifier to notify a determination result.

7. The unmanned aerial vehicle detection system of Claim 4,
   wherein the displayer displays a detail screen including a schematic diagram representing a positional relationship among the unmanned aerial vehicle, the first detection unit, and the second detection unit; the distance to the unmanned aerial vehicle; the certain distance; the first direction information; and the second direction information.

8. An unmanned aerial vehicle detection method in the unmanned aerial vehicle detection system, the method comprising:

   imaging an imaging area by a camera;
   picking up a sound in the imaging area by a microphone array;
   detecting an unmanned aerial vehicle appearing in the imaging area using the sound picked up by the microphone array;
   generating first identification information obtained by converting the unmanned aerial vehicle into visual information in a captured image of the imaging area; and
   displaying the first identification information by superimposing on the captured image of the imaging area on a displayer.

# FIG. 1

CA — OMNIDIRECTIONAL CAMERA

MA — MICROPHONE ARRAY

CZ — PTZ CAMERA

UD

CA — OMNIDIRECTIONAL CAMERA

MA — MICROPHONE ARRAY

CZ — PTZ CAMERA

UD

CA — OMNIDIRECTIONAL CAMERA

MA — MICROPHONE ARRAY

CZ — PTZ CAMERA

UD

NW

5

RM

50

MONITOR

10

MONITORING DEVICE

MONITORING ROOM

EP 3 493 554 A1

# FIG. 2

# FIG. 3

# FIG. 4

EP 3 493 554 A1

CA

NETWORK CONNECTOR — 47

COMMUNICATOR — 42

POWER SUPPLY MANAGER — 44

CPU — 41

IMAGE SENSOR — 45

MEMORY — 46

ROM — 46z

RAM — 46y

MEMORY CARD — 46x

# FIG. 5

<u>CZ</u>

```
                                          ┌──────────────┐      ┌──────────────┐
                                    58    │   IMAGING    │  59  │ LENS DRIVING │
                                          │  DIRECTION   │──────│    MOTOR     │
                                          │  CONTROLLER  │      │              │
                                          └──────┬───────┘      └──────────────┘
                                                 │
┌──────────┐   ┌──────────────┐   ┌───────────┐  │
│  57      │   │  52          │   │           │  55   ┌──────────────┐
│ NETWORK  │   │ COMMUNICATOR │   │    CPU     │──────│ IMAGE SENSOR │
│CONNECTOR │───│              │───│            │      └──────────────┘
└──────────┘   └──────────────┘   │    51      │
                                  │            │
       ┌──────────────┐          │            │      ┌──────────────┐
       │  54          │          │            │      │   MEMORY  56 │
       │ POWER SUPPLY │          │            │──────│              │
       │   MANAGER    │          │            │      │  ┌──────┐ 56z│
       └──────────────┘          │            │──────│  │ ROM  │    │
                                  │            │      │  └──────┘    │
                                  │            │──────│  ┌──────┐ 56y│
                                  │            │      │  │ RAM  │    │
                                  │            │      │  └──────┘    │
                                  │            │──────│  ┌──────┐ 56x│
                                  └───────────┘      │  │MEMORY│    │
                                                     │  │ CARD │    │
                                                     │  └──────┘    │
                                                     └──────────────┘
```

EP 3 493 554 A1

# FIG. 6

# FIG. 7

FREQUENCY (Hz)

f4

f3

f2

f1

TIME t

# FIG. 8

FREQUENCY (Hz)

f14

f13

f12

f11

TIME t

# FIG. 9

EP 3 493 554 A1

# FIG. 10

( START DETECTION DETERMINATION
OF UNMANNED AERIAL VEHICLE )

SET INITIAL POSITION OF
DIRECTIONAL DIRECTION — S21

IS SOUND DATA STORED? — S22 — NO

YES

DIRECTIVITY PROCESSING — S23

FREQUENCY ANALYZING PROCESSING — S24

DETECTION PROCESSING OF UNMANNED AERIAL VEHICLE — S25

DETERMINATION PROCESSING OF DETECTION RESULT — S26

IS THERE UNMANNED
AERIAL VEHICLE? — S27

S28 — YES

NOTIFY OF DETERMINATION RESULT

NO

TRANSIT DIRECTIONAL DIRECTION — S29

COMPLETED
OMNIDIRECTIONAL
SCANNING? — S30 — NO

YES

REMOVE STORED SOUND DATA — S31

TERMINATE DETECTION? — S32 — NO

YES

( TERMINATE DETECTION DETERMINATION
OF UNMANNED AERIAL VEHICLE )

# FIG. 11

EP 3 493 554 A1

## FIG. 12

# FIG. 13

EP 3 493 554 A1

FIG. 14

# FIG. 15

# FIG. 16

EP 3 493 554 A1

FIXED CAMERA

CF

MA

MICROPHONE ARRAY

MONITOR FIXED AREA

MONITOR OMNIDIRECTION

R0    B1    ag1

mk

R1

bLg

5A

CZ

PTZ CAMERA

ROTATE DIRECTION AND ZOOM UP

50

dn

# FIG. 17

MONITOR PLURALITY OF AREAS

PTZ CAMERA

CZ1

MA

MONITOR OMNIDIRECTION

MICROPHONE ARRAY

ag2-1  ag2-2

mk  R0  B1

R1

ag2-4  ag2-3

bLg

5B

CZ

ROTATE DIRECTION AND ZOOM UP

PTZ CAMERA

50

dn

EP 3 493 554 A1

# FIG. 18

OMNIDIRECTIONAL CAMERA — CA

MA — MICROPHONE ARRAY

MONITOR OMNIDIRECTION

MONITOR OMNIDIRECTION

GZ3

R0

mk

R1

B1

5C

FIXED CAMERA — CF2-1

FIXED CAMERA — CF2-2

FIXED CAMERA — CF2-N

SPECIFY CAMERA IN DIRECTION

50

dn

# FIG. 19

EP 3 493 554 A1

# FIG. 20

FIXED CAMERA — CF

MONITOR FIXED AREA →

MA

MICROPHONE ARRAY

MONITOR OMNIDIRECTION →

R0
B1
mk
ag1
R1
bLg

5D

FIXED CAMERA — CF2-1

FIXED CAMERA — CF2-2

⋮

FIXED CAMERA — CF2-N

SPECIFY CAMERA IN DIRECTION →

50

dn

EP 3 493 554 A1

# FIG. 21

MONITOR PLURALITY OF AREA

PTZ CAMERA

CZ1

MA

MONITOR OMNIDIRECTION

MICROPHONE ARRAY

ag2-1    ag2-2

R0    B1

mk

R1

bLg

ag2-4    ag2-3

5E

CF2-1

FIXED CAMERA

SPECIFY CAMERA IN DIRECTION

50

FIXED CAMERA

CF2-2

FIXED CAMERA

CF2-N

dn

EP 3 493 554 A1

# FIG. 22

DISTANCE CALCULATION DEVICE — 90

5F

DETECTION DEVICE

DT1

UD1

10A — 50A

DETECTION DIRECTION

DT2

DETECTION DEVICE

UD2

50B

10B

DETECTION DIRECTION

# FIG. 23

90

DISTANCE CALCULATION DEVICE

94
SETTING MANAGER

95
COMMUNICATOR

92
MEMORY

91
DISTANCE CALCULATION PROCESSOR

93
OPERATOR

96
DISPLAY

# FIG. 24

```
      ┌──────────────────────┐
      │   START DETECTION     │
      │      MOVEMENT         │
      └──────────────────────┘
                 │
                 ▼
  ┌────────────────────────────────────┐
  │         INPUT VOICE DATA            │──── S51
  └────────────────────────────────────┘
                 │
                 ▼
  ┌────────────────────────────────────┐
  │ DETECTION PROCESSING OF UNMANNED    │──── S52
  │ AERIAL VEHICLE BY SOUND SOURCE      │
  │ SEARCH                              │
  └────────────────────────────────────┘
                 │
                 ▼         S53
            ◇──────────────
     NO    DETECTED UNMANNED
  ◄────────  AERIAL VEHICLE?
            ◇──────────────
                 │ YES
                 ▼
  ┌────────────────────────────────────┐
  │    CALCULATE DETECTION DIRECTION    │──── S54
  └────────────────────────────────────┘
                 │
                 ▼
  ┌────────────────────────────────────┐
  │    NOTIFY OF DETECTION DIRECTION    │──── S55
  └────────────────────────────────────┘
```

# FIG. 25

```
          ┌─────────────────────┐
          │   START DISTANCE    │
          │    CALCULATION      │
          └─────────────────────┘
                    │
       ┌────────────┘
       │            │
       │         ╱──┴──╲  ~S61
       │        ╱ IS THERE ╲
  NO ◄─┼───────  DETECTION INFORMATION
       │        ╲ FROM DETECTION DEVICE ╱
       │         ╲    DT1?   ╱
       │          ╲────┬────╱
       │            YES │
       │                │
       │         ╱──────┴──╲  ~S62
       │        ╱  IS THERE  ╲
  NO ◄─┼───────  DETECTION INFORMATION
       │        ╲ FROM DETECTION DEVICE ╱
       │         ╲     DT2?   ╱
       │          ╲─────┬────╱
       │            YES │
       │                │
       │    ┌───────────┴───────────────┐
       │    │ CALCULATE DISTANCE TO     │ ~S63
       │    │ DETECTION TARGET USING    │
       │    │ TRIANGULATION METHOD      │
       │    └───────────┬───────────────┘
       │                │
       │    ┌───────────┴───────────────┐
       │    │     DISPLAY DISTANCE      │ ~S64
       │    └───────────┬───────────────┘
       │                │
       └────────────────┘
```

FIG. 26

EP 3 493 554 A1

# FIG. 27

EP 3 493 554 A1

# FIG. 28

GM

96

dn

006.81 M

L1    L2

UD1    UD2

α1    α2

wd1    wd2

DISTANCE BETWEEN MICROPHONES (M)

2.0

bn1

IP ADDRESS 127.0.0.44

CONNECTION  DISCONNECTION  SW1

Td1

ALERTING ID: 1
VERTICAL ANGLE: 72.1
HORIZONTAL ANGLE: 246.8  } det1

bn3

IP ADDRESS 127.0.0.1

CONNECTION  DISCONNECTION  SW2

Td2

ALERTING ID: 2
VERTICAL ANGLE: 71.05
HORIZONTAL ANGLE: 240.26  } det2

bn2

MEASURE DISTANCE ▼

bn4

ENVIRONMENT SETTING

LOAD SETTING    SAVE SETTING

SAVE DEFAULT

bn5

# FIG. 29

START AREA
ESTIMATION

S71
IS THERE
DETECTION INFORMATION
FROM DETECTION DEVICE
DT3?

NO

YES

S72
IS THERE
DETECTION INFORMATION
FROM DETECTION DEVICE
DT4?

NO

YES

S73
IS THERE
DETECTION INFORMATION
FROM DETECTION DEVICE
DT5?

NO

YES

S74
IS THERE
DETECTION INFORMATION
FROM DETECTION DEVICE
DT6?

NO

YES

CALCULATE DISTANCE FROM EACH
DETECTION DEVICE TO DETECTION TARGET — S75

ESTIMATE AREA OF DETECTION TARGET — S76

DISPLAY AREA OF DETECTION TARGET — S77

# FIG. 30

EP 3 493 554 A1

# FIG. 31A

GZ11

GZ12

mk1

mk2

ALERT WHEN TWO DETECTIONS ARE ALIGNED
IN SAME DIRECTION ANGLES

# FIG. 31B

GZ11

GZ12

mk1

ONE SIDE DETECTION IS FALSE DETECTION

# FIG. 31C

GZ11

GZ12

mk1

mk2

FALSE DETECTION WHEN TWO DETECTIONS HAVE
DIFFERENT DIRECTION ANGLES

# FIG. 32

START IDENTIFICATION MARK
DISPLAY

S81
NO ← IS THERE
DETECTION INFORMATION
FROM DETECTION DEVICE
DT1?

YES

S82
NO ← IS THERE
DETECTION INFORMATION
FROM DETECTION DEVICE
DT2?

YES

DISPLAY IDENTIFICATION MARK — S83

DETERMINE POSITIONS OF TWO IDENTIFICATION MARKS — S84

S85
NO ← ARE AZIMUTHS OF
TWO IDENTIFICATION MARKS
ALIGNED?

YES

ALARM — S86

**INTERNATIONAL SEARCH REPORT**

| International application No. |
|---|
| PCT/JP2017/024476 |

A. CLASSIFICATION OF SUBJECT MATTER
*H04R3/00*(2006.01)i, *B64F1/36*(2017.01)i, *G08B25/00*(2006.01)i, *H04N7/18* (2006.01)i, *H04R1/40*(2006.01)i

According to International Patent Classification (IPC) or to both national classification and IPC

B. FIELDS SEARCHED

Minimum documentation searched (classification system followed by classification symbols)
H04R3/00, B64F1/36, G08B25/00, H04N7/18, H04R1/40

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho  1971–2017   Toroku Jitsuyo Shinan Koho   1994–2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | WO 2016/098315 A1 (Panasonic Intellectual Property Management Co., Ltd.), 23 June 2016 (23.06.2016), paragraphs [0117] to [0203]; fig. 12 to 34 & JP 2016-152557 A paragraphs [0037] to [0094]; fig. 6 to 20 | 1-3,8<br>4-7 |
| Y | JP 2011-015050 A (Nittobo Acoustic Engineering Co., Ltd.), 20 January 2011 (20.01.2011), paragraph [0028] (Family: none) | 1-3,8 |
| A | JP 2006-168421 A (Toshiba Corp.), 29 June 2006 (29.06.2006), entire text; all drawings (Family: none) | 1-8 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 September 2017 (05.09.17) | 12 September 2017 (12.09.17) |

| Name and mailing address of the ISA/ Japan Patent Office 3-4-3,Kasumigaseki,Chiyoda-ku, Tokyo 100-8915,Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2017/024476 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2016-118987 A (Panasonic Intellectual Property Management Co., Ltd.), 30 June 2016 (30.06.2016), entire text; all drawings (Family: none) | 1-8 |
| A | JP 2010-183417 A (Hitachi, Ltd.), 19 August 2010 (19.08.2010), entire text; all drawings (Family: none) | 1-8 |
| A | JP 2014-143678 A (Panasonic Corp.), 07 August 2014 (07.08.2014), entire text; all drawings & US 2015/0350621 A1 entire document & WO 2014/103331 A1 & EP 2941013 A1 & CN 104904236 A | 1-8 |

Form PCT/ISA/210 (continuation of second sheet) (January 2015)

**EP 3 493 554 A1**

**Patent documents cited in the description**

- JP 2006168421 A
- JP 2014143678 A
- JP 2015029241 A